# EUROPÄISCHE PATENTSCHRIFT

(11) **EP 3 325 747 B1**
(45) Veröffentlichungstag und Bekanntmachung des Hinweises auf die Patenterteilung: **04.03.2020**
(21) Anmeldenummer: 16751507.1
(22) Anmeldetag: 21.07.2016
(51) Int. Cl.: E05F 5/00, F16F 9/18, F16F 9/53, F16F 9/56, F16D 57/00, E05C 17/22

(54) **TÜRKOMPONENTE MIT EINER STEUERBAREN DÄMPFEREINRICHTUNG**
DOOR COMPONENT COMPRISING A CONTROLLABLE DAMPING DEVICE
ÉLÉMENT DE PORTE MUNI D'UN DISPOSITIF AMORTISSEUR PILOTABLE

(30) Priorität: 21.07.2015 DE 102015009449; 11.11.2015 DE 102015119505
(43) Veröffentlichungstag der Anmeldung: 30.05.2018
(73) Patentinhaber: Inventus Engineering GmbH, 6771 St. Anton i. M. (AT)
(72) Erfinder: BATTLOGG, Stefan, 6771 St. Anton i.M. (AT); MAYER, Markus, 6832 Sulz (Vorarlberg) (AT)
(74) Vertreter: BSB Patentanwälte Schütte & Engelen Partnerschaft mbB
(86) Internationale Anmeldenummer: PCT/EP2016/067472
(87) Internationale Veröffentlichungsnummer: WO 2017/013233

(56) Entgegenhaltungen:
- EP-A2- 2 703 686
- WO-A1-2004/001170
- DE-A1-102012 024 376
- US-A1- 2010 019 514

## Beschreibung

Die vorliegende Erfindung betrifft eine Türkomponente mit einer steuerbaren Dämpfereinrichtung insbesondere für ein Kraftfahrzeug. Dabei umfasst die Türkomponente zwei relativ zueinander bewegbare Anschlusseinheiten, deren Relativbewegung zueinander durch wenigstens eine steuerbare Dämpfereinrichtung wenigstens abgebremst werden kann. Dabei ist eine der beiden Anschlusseinheiten mit einer Tragkonstruktion und die andere der beiden Anschlusseinheiten mit einer verschwenkbaren Türeinrichtung und insbesondere Fahrzeugtür verbindbar bzw. verbunden.

Im Stand der Technik sind verschiedenste Türkomponenten bekannt geworden, mit denen eine gezielte Dämpfung der Türbewegung und insbesondere auch ein gezieltes Fixieren der Tür in vorbestimmten Winkelstellungen möglich ist. Meist werden dazu mechanische Systeme eingesetzt, die kostengünstig sind und in zwei oder drei Winkelstellungen eine Feststellung der Tür eines Kraftfahrzeugs erlaubt. Dadurch kann der Benutzer die Tür in eine der Winkelstellungen bringen, die aufgrund der aktuellen Platzsituation geeignet erscheint und das Auto verlassen.

Nachteilig an diesem bekannten mechanischen Systemen ist allerdings, dass die Tür nur in einer gewissen Anzahl definierter Winkelstellungen fixiert ist. Wenn gerade weniger oder auch mehr Platz zur Verfügung steht, gibt es gegebenenfalls keine passende Einstellung.

Es sind auch aktive Systeme bekannt geworden, bei denen grundsätzlich in beliebigen Positionen die Tür abgebremst oder fixiert werden kann. Ein Nachteil von beispielsweise mit einer Spindel betätigten Systemen ist, dass diese relativ viel Zeit zum Öffnen oder Schließen der Türe benötigen. Es sind auch Systeme bekannt geworden, die beispielsweise über eine magnetorheologische Bremse verfügen und bei denen eine elektrische Spule ein Magnetfeld erzeugt, um die gewünschte Dämpfung zu erzielen. Ein Nachteil bei diesem System ist, dass bei der Dämpfung immer elektrische Energie benötigt wird, was beispielsweise bei einem längeren Aufenthalt auf beispielsweise einem Parkplatz mit geöffneter Tür einen erheblichen Energieverbrauch verursachen kann.

Es ist auch ein System bekannt geworden, bei dem über einen Permanentmagneten das zur Dämpfung erforderliche Magnetfeld erzeugt wird. Ein erheblicher Vorteil dieses Systems besteht darin, dass der Energieverbrauch gering ist. Nachteilig ist aber, dass beispielsweise bei einem Unfall und einem Ausfall der elektrischen Systeme die Tür nur mit sehr großer Kraft bewegt werden kann, da über den Permanentmagneten eine hohe Dämpfung erzeugt wird. Das kann gerade dann problematisch sein, wenn ältere Menschen oder Kinder im Auto sitzen und sie die Tür nur schwer oder gegebenenfalls gar nicht öffnen können.

Die US 2010/0019514 A1 wird als naheliegendster Stand der Technik betrachtet, und offenbart einen Dämpfer für eine Autotür. Dabei wird ein magnetorheologisches Fluid zur Dämpfung eingesetzt. Durch Ausnutzung der Remanenz der magentischen Komponenten wird eine Haltefunktion realisiert. Durch ein sich abschwächendes magnetisches Wechselfeld kann das permanent wirkende Magnetfeld abgebaut werden.Mit der WO 2004/001170 A1 ist ein Türsteuersystem für ein stufenloses Halten einer Fahrzeugtür bekannt geworden, beim den ein magnetorheologischer Dämpfer eingesetzt wird, der eine durchgehende Kolbenstange aufweist, wodurch eine Vorbelastung der Fahrzeugtür in eine Endstellung vermieden wird.

Die DE 10 2012 024 376 A1 betrifft eine Kraftfahrzeugtür mit einem magnetorheologischen oder magnetohydronamischen Element, wobei ein Sensor dem Türflügel zugeordnet ist, um die Dämpfung der Bewegung des Türflügels positionsabhängig steuern zu können. Es ist die Aufgabe der vorliegenden Erfindung, eine Türkomponente und ein Verfahren zur Verfügung zu stellen, womit eine wenigstens teilweise verbesserte Türkomponente insbesondere für ein Kraftfahrzeug zu Verfügung gestellt werden kann, welche eine stromlose Haltefunktion im geöffneten Zustand und ein einfaches Schließen nach dem Öffnen ermöglicht.

Diese Aufgabe wird gelöst durch eine Türkomponente mit den Merkmalen des Anspruchs 1. Bevorzugte Weiterbildungen der Erfindung sind Gegenstand der Unteransprüche. Bevorzugte Merkmale, Weiterbildungen und Ausgestaltungen werden auch in der allgemeinen Beschreibung und der Beschreibung der Ausführungsbeispiele erläutert.

Eine erfindungsgemäße Türkomponente weist wenigstens eine steuerbare Dämpfereinrichtung auf und umfasst zwei relativ zueinander bewegbare Anschlusseinheiten, wobei eine der beiden Anschlusseinheiten mit einer Tragkonstruktion und die andere der beiden Anschlusseinheiten mit einer bewegbaren Türeinrichtung insbesondere eines (Kraft-)Fahrzeugs verbindbar ist, um eine Bewegung (insbesondere Schwenkbewegung) der Türeinrichtung wenigstens teilweise zwischen einer Schließstellung und einer Öffnungsstellung mit einer Steuereinrichtung gesteuert zu dämpfen. Dabei ist insbesondere eine Relativbewegung der zueinander bewegbaren Anschlusseinheiten gesteuert dämpfbar. Die Dämpfereinrichtung enthält insbesondere ein magnetorheologisches Fluid als Arbeitsfluid. Die Dämpfereinrichtung umfasst wenigstens ein elektrisch einstellbares und seinen eingestellten Zustand stromlos haltendes magnetorheologisches Dämpfungsventil, um über eine elektrische Einstellung des Dämpfungsventils eine Dämpfungseigenschaft der Dämpfereinrichtung bedarfsweise dauerhaft einzustellen. Die Steuereinrichtung ist dazu eingerichtet und ausgebildet ist, das Dämpfungsventil in der Schließstellung der Tür auf eine stromlos wirkende geringe Dämpfung einzustellen und die Steuereinrichtung ist dazu eingerichtet und ausgebildet, das Dämpfungsventil in einer Öffnungsstellung der Türeinrichtung nach Ablauf einer vorgegebenen Zeitspanne auf eine stromlos wirkende starke Dämpfung einzustellen.

Die erfindungsgemäße Türkomponente hat viele Vorteile. Ein erheblicher Vorteil der erfindungsgemäßen Türkomponente besteht darin, dass ein Zustand des magnetorheologischen Dämpfungsventils und somit auch ein Zustand der Dämpfereinrichtung elektrisch einstellbar ist. Ein besonderer Vorteil besteht darin, dass das Dämpfungsventil seinen eingestellten Zustand auch dann beibehält, wenn es stromlos geschaltet wird. Unter dem Begriff "stromlos" im Sinne der vorliegenden Erfindung ist ein Zustand zu verstehen, bei dem das Dämpfungsventil und gegebenenfalls auch die Dämpfereinrichtung weitgehend oder weitestgehend oder vollständig stromlos ist. Zur Aufrechterhaltung der Steuerungsfunktion und gegebenenfalls zur Aufnahme von Sensordaten kann aber weiterhin ein - sehr geringer - Strombedarf bestehen. "Stromlos" im Sinne der vorliegenden Erfindung bedeutet deshalb, dass im Mittel nur ein äußerst geringer Bruchteil des normalen Strombedarfs des Dämpfungsventils benötigt wird. Unter einem stromlosen Zustand wird folglich ein Zustand des Dämpfungsventils verstanden, in dem das Dämpfungsventil selbst weniger als ein Prozent und insbesondere weniger als ein Promille oder weniger als 0,1 Promille des Strombedarfs benötigt, wenn es elektrisch verstellt wird. Besonders bevorzugt behält das Dämpfungsventil seinen eingestellten Zustand komplett stromlos.

Die Türkomponente kann in allen Ausgestaltungen zur Dämpfung einer Schwenkbewegung der bewegbaren Türeinrichtung und insbesondere Tür zwischen der Schließstellung und einer beliebigen Öffnungsstellung dienen. Beispielsweise kann die Türkomponente mit der Dämpfereinrichtung die bewegbare Türeinrichtung über den gesamten möglichen Bewegungsbereich und insbesondere Schwenkbereich gesteuert dämpfen. Möglich ist es aber auch, dass eine Dämpfung einer Schwenkbewegung nur in bestimmten Winkelbereichen oder an bestimmten Winkelpunkten erfolgt.

Besonders bevorzugt ist die Türeinrichtung als Tür ausgeführt und ist schwenkbar an der Tragkonstruktion aufgenommen. In solchen Ausgestaltungen kann die Türeinrichtung als Tür bezeichnet werden. Es ist auch z. B. möglich, an einem Fahrzeug eine Heccklappe, einen Heckdeckel oder z. B. eine Motorhaube als Türeinrichtung während der Öffnungs- und/oder Schließbewegung gezielt zu dämpfen. Obwohl im folgenden in der Regel der Begriff "Tür" verwendet wird so kann der Begriff auch durchgängig durch den Begriff "Türeinrichtung" oder durch "Klappe" oder "Deckel" ersetzt werden.

Möglich ist es auch, eine Schiebetür als bewegbare Türeinrichtung einzusetzen. Dann kann über einen Teil des Öffnungs- oder Schließweges oder über den ganzen Schiebeweg oder an definierten Punkten eine gezielte Dämpfung der Bewegung erfolgen.

Unter dem Begriff "dämpfen" ist hier eine Dämpfung einer Bewegung zu verstehen, die auch als Bremsen bezeichnet werden kann. Das bedeutet, dass die Dämpfereinrichtung auch als Bremseinrichtung bezeichnet werden kann. Die Dämpfung der Bewegung kann zu einer Fixierung der relativ zueinander bewegbaren Anschlusseinheiten und somit der bewegbaren Türeinrichtung führen, sodass die Türeinrichtung in einer bestimmten Position oder Winkelposition fixiert wird und von dort nur durch eine besonders große Kraft, die die maximale Kraft der Dämpfereinrichtung übersteigt, bewegt werden kann.

Vorzugsweise ist es möglich, die Bewegung der Anschlusseinheiten zueinander über die Dämpfereinrichtung gesteuert zu blockieren.

Dadurch, dass die Dämpfereinrichtung wenigstens ein magnetorheologisches Dämpfungsventil umfasst, ergeben sich erhebliche Vorteile, da das magnetorheologische Dämpfungsventil in kürzester Zeit seinen Zustand ändern kann. Außerdem kann berührungslos, und ohne einen mechanischen Antrieb ein magnetisches Feld erzeugt werden, welches das magnetorheologische Dämpfungsventil beeinflusst und somit die Dämpfereigenschaft der Dämpfereinrichtung verstellt.

In allen Ausgestaltungen kann die Türkomponente beispielsweise als Fahrertür oder Beifahrertür oder sonstige Fahrzeugtür ausgeführt sein bzw. eine solche umfassen. Als "Tür" einer Türkomponente im Sinne der vorliegenden Erfindung wird aber auch eine verschwenkbare Klappe oder Haube wie ein vorderer oder hinterer Deckel des Fahrzeugs wie eine Heckklappe oder eine Motorhaube verstanden.

Vorzugsweise umfasst das Dämpfungsventil einen von einer magnetorheologischen Flüssigkeit durchströmbaren Strömungskanal (oder mehrere Strömungskanäle), wobei der Strömungskanal einem veränderbaren Magnetfeld aussetzbar ist. Dadurch ist der Strömungswiderstand des Strömungskanals und somit eine Dämpfung der Dämpfereinrichtung über das Magnetfeld in dem Strömungskanal beeinflussbar. Bei einem starken Magnetfeld wird eine stärkere Dämpfung erzielt als bei einem schwachen Magnetfeld.

In bevorzugten Weiterbildungen wird das Magnetfeld durch eine wenigstens teilweise aus hartmagnetischem Material bestehende Magneteinrichtung dauerhaft erzeugt bzw. ist dadurch erzeugbar. Die Magneteinrichtung wirkt vorzugsweise (ohne äußere Steuerungseinflüsse) als Dauermagnet, der seine magnetischen Eigenschaften dauerhaft beibehält. Die Magnetisierung der Magneteinrichtung ist durch wenigstens einen magnetischen Impuls wenigstens einer elektrischen Spule dauerhaft veränderbar.

Dadurch kann das hartmagnetische Material (im Rahmen seiner Materialeigenschaften) beliebig und insbesondere dauerhaft magnetisiert werden. Zur Magnetisierung reicht ein magnetischer Impuls einer elektrischen Spule von sehr kurzer Dauer. Der magnetische Impuls ist dabei vorzugsweise kürzer als 1 Sekunde und insbesondere kürzer als 50 ms und kürzer als 10 ms und kann noch erheblich kürzer werden. Das hartmagnetische Material der Magneteinrichtung reagiert auf einen konzentrierten magnetischen Impuls praktisch sofort und ändert in Abhängigkeit von der Höhe und der Dauer des Impulses seine Magnetisierung insbesondere permanent. Jedenfalls behält die Magneteinrichtung die durch den Impuls eingestellten magnetischen Eigenschaften für einen Zeitraum bei, der länger als die Zeitdauer des Impulses beträgt. Insbesondere behält die Magneteinrichtung die durch den Impuls eingestellten magnetischen Eigenschaften für einen Zeitraum bei, der ein Vielfaches länger ist als der Impuls. Das Verhältnis ist vorzugsweise größer 2, größer 10 und insbesondere größer 1000. Soll die Magnetisierung der Magneteinrichtung rückgängig gemacht werden, so kann dies über ein mit der elektrischen Spule erzeugtes magnetisches Wechselfeld mit abnehmender Amplitude, oder durch einen gezielten Gegenimpuls erfolgen. Dadurch kann das hartmagnetischem Material wieder entmagnetisiert werden und kann anschließend wieder durch einen gezielten magnetischen Impuls beliebig magnetisiert werden.

Durch den Einsatz einer Magneteinrichtung die wenigstens teilweise aus einem hartmagnetischen Material besteht, kann so auch ohne Stromzufuhr dauerhaft ein bestimmtes Magnetfeld aufrechterhalten werden, welches die gewünschte Dämpfung der Dämpfereinrichtung zur Verfügung stellt.

Das bedeutet beispielsweise, dass bei einem Halt auf einem Parkplatz und einer länger geöffneten Türeinrichtung oder Tür ein entsprechender magnetischer Impuls erzeugt werden kann. Anschließend steht dauerhaft ohne weitere Stromzufuhr die gewünschte Dämpfung zur Verfügung. Es kann die Türeinrichtung (Tür) sogar in der gerade bestehenden Winkelstellung fixiert werden. Nach der Überführung in die Schließstellung kann durch ein entsprechendes magnetisches Wechselfeld die Magnetisierung "gelöscht" werden, sodass kein oder nur noch ein sehr geringes magnetisches Feld an dem Dämpfungsventil der Dämpfereinrichtung wirkt. Vorzugsweise wird die Magnetisierung der Magneteinrichtung nach erfolgten Schließvorgang immer auf einen minimalen oder sehr geringen Wert eingestellt. Das hat den erheblichen Vorteil, dass bei einem Unfall die (Fahrzeug-) Tür leichtgängig bleibt und einfach auch von Kindern oder alten Menschen geöffnet werden kann.

In allen Ausgestaltungen ist es bevorzugt, dass wenigstens eine Sensoreinrichtung zugeordnet ist, um ein Maß für eine (Winkel-) Stellung der bewegbaren Türeinrichtung zu erfassen. Damit kann eine stellungsabhängige und insbesondere winkelabhängige oder winkeloptimierte Steuerung erfolgen. Es ist bevorzugt, dass die Sensoreinrichtung wenigstens ein Rad oder insbesondere Reibrad umfasst, mit welchem ein Maß für eine Relativbewegung der beiden Anschlusseinheiten zueinander erfassbar ist. Dabei liegt insbesondere das (Reib) Rad auf der Kolbenstange auf und wird durch die Längsbewegung der Kolbenstange bei der Relativbewegung der beiden Anschlusseinheiten zueinander in Rotation versetzt. Das Rad oder Reibrad ist vorzugsweise mit einem Drehgeber verbunden. Ein Vorteil dabei ist, dass eine rotative Wegmessung kostengünstiger ist als eine lineare Wegmessung. Über mehrere Umdrehungen kann der gleiche Sensor/Magnetring/Encoder genutzt werden.

Bei der Voraussetzung einer relativ hohe Auflösung kann eine lineare Wegmessung kostengünstiger umgesetzt werden. Es sind auch andere und z. B. nicht auf magnetischen Encodern basierende lineare Messsysteme bzw. Sensoreinrichtungen denkbar. Ein absolutes Wegmesssystem kann auch Vorteile bieten. Ein absolutes Wegmesssystem ist rotativ schwieriger aufzubauen, da es einen großen Raddurchmesser erfordert, da regelmäßig nur eine Umdrehung zulässig ist. Denkbar ist es auch, zwei (unterschiedlich große) Räder zu verwenden. Aus den beiden Einzelpositionen kann die absolute Position bestimmt werden.

Eine günstige Ausgestaltung und eine zuverlässige Erfüllung ermöglicht ein inkrementelles Wegmesssystem, das insbesondere mit zusätzlichen Positionsinformationen ergänzt wird. Vorteilhaft können z. B. Indexpulse an bestimmten Positionen sein. Das kann ein eigener Index z. B. kurz vor Hubende sein, aber auch schon ein in der Türeinrichtung oder Türe vorhandener Sensor (z. B. Türe geschlossen). Ein Vorteil dabei ist, dass ein "Verzählen" der Sensoreinrichtung nicht mehr kritisch ist, die Sensoreinrichtung findet wieder zu definierten Positionen zurück. Ein Verzählen wäre z. B. bei Schlupf möglich oder wenn z. B. bei offener Türeinrichtung bzw. Türe die Versorgung einbricht (Batteriewechsel.

Die Steuereinrichtung ist dazu eingerichtet und ausgebildet, das Dämpfungsventil in der Schließstellung der Türeinrichtung auf eine stromlos wirkende geringe (bzw. geringere) Dämpfung einzustellen. Die Steuereinrichtung ist dazu eingerichtet und ausgebildet, das Dämpfungsventil in einer Öffnungsstellung der Türeinrichtung bzw. Tür nach Ablauf einer vorgegebenen Zeitspanne auf eine stromlos wirkende starke (bzw. stärkere) Dämpfung einzustellen. Die stromlos wirkende geringe Dämpfung in der Schließstellung bietet erhebliche Sicherheitsvorteile. Die stromlos wirkende starke Dämpfung in einer Öffnungsstellung ist dann vorteilhaft, wenn der Benutzer die Türeinrichtung lange geöffnet hält. Dann wird bei einem aktiven System ständig Energie benötigt, um die Dämpfung aufrechtzuerhalten. Mit der vorliegenden Erfindung wird nur ein einmaliger magnetischer Impuls benötigt, der anschließend für eine beliebig lange Dämpfung oder Fixierung der Tür sorgt.

Das bedeutet vorzugsweise, dass die Steuereinrichtung dazu eingerichtet und ausgebildet ist, die Dämpfereinrichtung bei geschlossenem Zustand der Türeinrichtung, also in der Schließstellung, auf eine stromlos wirkende geringe (geringere) Betätigungskraft einzustellen. Insbesondere ist die Steuereinrichtung dazu eingerichtet und ausgebildet, die Dämpfereinrichtung bei geöffneter Türeinrichtung nach Ablauf einer vorgegebenen Zeitspanne auf eine stromlos wirkende große (größere) Betätigungskraft einzustellen. Insbesondere wird bei geschlossener Türeinrichtung bzw. Tür die Dämpfereinrichtung bzw. das Dämpfungsventil stromlos und mit geringer Dämpfung eingestellt. Bei einer Bewegung der Türeinrichtung bzw. Tür wird regelmäßig eine geringe Dämpfung eingestellt, um dem Benutzer ein leichtgängiges Öffnen der Türeinrichtung oder Tür zu ermöglichen. Bei Verweilen der offenen Türeinrichtung oder Tür in einem bestimmten Zustand wird eine höhere Dämpfung über ein magnetischen Impuls und die Remanenz der Magneteinrichtung eingestellt.

Vorzugsweise ist die Steuereinrichtung dazu eingerichtet und ausgebildet, das Dämpfungsventil beim Bewegen der Türeinrichtung auf eine stromlos wirkende geringe Dämpfung einzustellen.

In allen Ausgestaltungen ist es bevorzugt, dass das in dem Strömungskanal wirkende Magnetfeld mit einer elektrischen Spule modulierbar ist. Das bedeutet, dass beispielsweise bei einer länger geöffneten Türeinrichtung ein permanent wirkendes Magnetfeld über einen magnetischen Impuls eingestellt werden kann. Wird nun die Türeinrichtung von dem Benutzer zum Beispiel langsam in die Schließstellung überführt, so wird durch eine elektrische Spule ein gegenwirkendes Magnetfeld erzeugt, sodass das tatsächlich wirksame Magnetfeld in dem Dämpfungskanal des Dämpfungsventils verringert wird und somit die Türeinrichtung leichtgängig verschwenkt werden kann.

Dabei ist es möglich, dass die elektrische Spule zu Modulierung des Magnetfeldes auch zur Erzeugung des magnetischen Impulses eingesetzt wird. Möglich ist es aber auch, dass wenigstens zwei elektrische Spulen eingesetzt werden, von denen eine beispielsweise zur Erzeugung eines magnetischen Impulses zur dauerhaften Magnetisierung verwendet wird. Die andere elektrische Spule kann dann beispielsweise zur Modulierung des Permanentmagneten eingesetzt werden.

Alternativ oder ergänzend ist es möglich, dass wenigstens ein mechanisch einstellbares Hydraulikventil als Dämpfungsventil vorgesehen ist. Beispielsweise kann ein motorisch einstellbares Hydraulikventil vorgesehen sein, welches über einen zugeordneten elektrischen Motor von einer geöffneten Stellung in eine teilweise oder vollständig geschlossene Stellung überführt werden kann. Auch mit einem solchen mechanisch einstellbaren Hydraulikventil kann stromlos eine geringe Dämpfung gehalten werden oder auch stromlos eine stärkere Dämpfung gehalten werden. Strom wird in diesem Fall nur benötigt, um das mechanisch einstellbare Hydraulikventil entsprechend weit zu öffnen oder zu schließen.

Die Erfindung ist auch ausgerichtet auf ein Verfahren zum Dämpfen einer Bewegung einer Türeinrichtung insbesondere eines Fahrzeugs mit einer Dämpfereinrichtung mit einer einstellbaren und steuerbaren Dämpfung, wobei eine Bewegung der Türeinrichtung und insbesondere eine Schwenkbewegung der Tür wenigstens teilweise zwischen einer Schließstellung und einer Öffnungsstellung gesteuert gedämpft wird. Dabei wird das magnetorheologische Dämpfungsventil der Dämpfereinrichtung bedarfsweise elektrisch eingestellt und hält die eingestellten Dämpfungseigenschaften stromlos dauerhaft. Die Steuereinrichtung stellt das Dämpfungsventil in der Schließstellung der Tür auf eine stromlos wirkende geringe Dämpfung ein und stellt das Dämpfungsventil in einer Öffnungsstellung der Türeinrichtung nach Ablauf einer vorgegebenen Zeitspanne auf eine stromlos wirkende starke Dämpfung ein.

Auch das erfindungsgemäße Verfahren hat viele Vorteile, da es auf einfache Art und Weise eine zuverlässige Dämpfung mit geringem Energieeinsatz ermöglicht.

Vorzugsweise wird ein Maß für die Position der Türeinrichtung (und insbesondere eine Winkelstellung der Tür) erfasst und dabei die Dämpferstellung bzw. die Dämpfereinrichtung in der Schließstellung der Türeinrichtung (Tür) auf eine stromlos geringe Dämpfung eingestellt und vorzugsweise wird die Dämpfereinrichtung in der Öffnungsstellung auf eine stromlos wirkende hohe Dämpfung eingestellt, wenigstens, wenn sich die Türeinrichtung (Tür) für eine vorgegebene Zeitspanne nicht wesentlich bewegt hat.

In allen Ausgestaltungen ist es möglich, eine Schwenkbewegung der Tür bzw. eine Bewegung einer Türeinrichtung wenigstens teilweise zwischen einer Schließstellung und einer Öffnungsstellung gesteuert zu dämpfen. Dabei kann ein Maß für eine Änderungsgeschwindigkeit der Bewegungsgeschwindigkeit der Türeinrichtung oder für eine Änderungsgeschwindigkeit der Drehgeschwindigkeit der Tür ermittelt und bei einer Änderungsgeschwindigkeit über einen vorbestimmten Grenzwert hinaus von einer derzeit eingestellten geringeren Dämpfung auf eine größere Dämpfung umgeschaltet werden.

Ein solches Verfahren hat viele Vorteile. Dieses Verfahren erlaubt einen sichereren Betrieb einer Türkomponente. Dabei wird unter der Änderungsgeschwindigkeit der Drehgeschwindigkeit die mathematische Ableitung der Drehgeschwindigkeit, also die Beschleunigung oder die Verzögerung verstanden. Das bedeutet, dass bei einer zu starken Änderung der Drehgeschwindigkeit die Steuerung in das Dämpfungsverhalten der Dämpfereinrichtung eingreift. Dabei wird der mathematische Betrag der Änderungsgeschwindigkeit berücksichtigt. Die Grenzwerte für Verzögerung und Beschleunigung können gleich sein, sind vorzugsweise aber unterschiedlich.

Das ermöglicht, dass bei einer starken Verzögerung der Türeinrichtung (Tür) praktisch sofort eine größere Dämpfung eingestellt wird, um Schäden möglichst zu vermeiden oder wenigstens zu verringern oder zu minimieren. Wird beispielsweise eine Tür eines Kraftfahrzeugs durch einen Windstoß oder durch eine sonstige Aktion in Schließrichtung bewegt und befindet sich beispielsweise ein Bein oder eine Hand oder ein sonstiger Gegenstand auf dem Weg der Schließbewegung so trifft die Tür zunächst - ohne weitere Sensoren - gegen das Objekt und wird dabei unerwartet abgebremst. Das bedeutet, dass beispielsweise bei einer relativ hohen Drehgeschwindigkeit der Tür eine unerwartete Änderung der Drehgeschwindigkeit auftritt. Das bedeutet hier, dass die Änderungsgeschwindigkeit der Drehgeschwindigkeit einen vorbestimmten Grenzwert übersteigt. Die Erfindung ermöglicht nun, dass bei Erkennung eines solchen Vorgangs sofort eine höhere (und insbesondere maximale) Dämpfung eingestellt wird, sodass ein Schaden insgesamt vielleicht sogar vermieden oder doch wenigstens erheblich verringert werden kann.

Beispielsweise kann beim Öffnen der Tür die Tür mit dem flachen Blech gegen ein zum Beispiel stumpfes Hindernis prallen, was sofort die Drehgeschwindigkeit der Tür senkt. Da sich die Bleche in der Regel über einen geringen Bereich biegeelastisch verformen können, kann somit bei einer sofortigen Aktion ein Schaden gegebenenfalls vollständig vermieden werden.

Das bedeutet, dass die Verzögerung der Türeinrichtung (Tür) vorzugsweise ermittelt wird und dass eine Verzögerung der Drehgeschwindigkeit über einen vorbestimmten Grenzwert hinaus die Dämpfung von einem geringen Wert auf eine große Dämpfung umgeschaltet wird. Dazu wird insbesondere die Geschwindigkeit bzw. die Drehgeschwindigkeit der Tür überwacht.

In allen Ausgestaltungen kann beim Schließen zum Beispiel in allen Fällen bei Erreichen eines kleinen Winkels die Tür abgebremst werden, umso ein sanftes oder sattes Schließen zu erzielen. Ein solcher kleiner Winkel ist z.B. 15° oder 10° oder 5°. Bei sensorischer Erkennung von Hindernissen kann im Vorfeld entsprechend abgebremst werden.

In bevorzugten Weiterbildungen wird die Dämpfung vorzugsweise auf einen im Wesentlichen maximalen Wert oder den maximalen Wert eingestellt, wenn die Änderungsgeschwindigkeit bzw. Verzögerung den vorbestimmten Grenzwert überschreitet.

Insbesondere wenn ein magnetorheologisches Dämpfungsventil der Dämpfereinrichtung eingesetzt wird, kann so eine sehr schnelle Reaktion des Systems erzielt werden. Magnetorheologische Dämpfereinrichtungen können innerhalb von wenigen Millisekunden ihre Einstellung vollständig ändern, sodass von einer minimalen Dämpfung bis zu einer maximalen Dämpfung nur ein Zeitraum von wenigen Millisekunden vergeht. Das bedeutet, dass bei tatsächlichen Schließbewegungen die Türeinrichtung (Tür) innerhalb von weniger als 5 mm und insbesondere weniger als 2 mm und vorzugsweise weniger als 1 mm und in vorteilhaften Ausgestaltungen in etwa 0,6 mm vollständig abgebremst werden kann. Bei derartig schnellen Bremsvorgängen können in vielen Fällen erhebliche Schäden vermieden werden, auch wenn der Benutzer beispielsweise Gebrauchsgegenstände oder auch Gegenstände wie Computer oder aber ein Körperteil wie seinen Finger, seine Hand oder andere Gliedmaßen an der Türeinrichtung eingeklemmt.

Vorzugsweise wird die Dämpfung vergrößert, wenn sich die Türeinrichtung (Tür) wenigstens einer vorbestimmten Position (Winkelposition) nähert. Das kann beispielsweise eine vorbestimmte Öffnungsposition sein. Vorzugsweise wird die Dämpfung vergrößert, wenn sich die Türeinrichtung (Tür) der Schließstellung nähert. Beispielsweise kann bei einem bestimmten Winkelbetrag von 15°, 10° oder 5° die Dämpfung so weit verstärkt werden, dass eine kontinuierliche und graduelle Abbremsung erfolgt.

Vorzugsweise wird die Dämpfung so vergrößert, dass die Bewegungsgeschwindigkeit/Drehgeschwindigkeit der Türeinrichtung/Tür bei einer Schließbewegung auf eine vorgegebene Schließgeschwindigkeit verringert wird. Die Schließgeschwindigkeit wird insbesondere so vorgegeben, dass ein sattes Schließen mit einer vorzugweise geringen Geräuschentwicklung durchgeführt wird.

In allen Ausgestaltungen ist es bevorzugt, dass wenigstens eine Lernfunktion integriert ist, mit der Schließgeschwindigkeiten bei Schließvorgängen ausgewertet werden. Damit wird vorzugsweise die vorgegebene Schließgeschwindigkeit angepasst, wenn sich herausstellt, dass bei vorhergehenden Schließvorgängen die Türeinrichtung/Tür nicht mehr ausreichend schnell für einen Schließvorgang war. Die Schließgeschwindigkeit wird so eingestellt, dass eine gerade ausreichende Geschwindigkeit zuverlässig zur Schließung führt.

In bevorzugten Weiterbildungen wird die Dämpfung vorzugsweise vergrößert, wenn sich die Türeinrichtung/Tür einer maximalen Öffnungsstellung nähert.

In allen Ausgestaltungen wird die Dämpfung vorzugsweise nur dann vergrößert, wenn die Drehgeschwindigkeit eine vorgegebene Drehgeschwindigkeit überschreitet. Dadurch kann beispielsweise vermieden werden, dass beim Schließvorgang die Dämpfung erhöht wird, obwohl der Benutzer die Türeinrichtung/Tür mit der Hand führt.

In allen Ausgestaltungen ist es möglich, wenigstens einen Sensor zuzuordnen, der eine Berührung der Türeinrichtung/Tür durch den Benutzer erkennt.

Die Vergrößerung der Dämpfung wird vorzugsweise nur dann ausgeführt, wenn die Drehgeschwindigkeit eine vorgegebene Drehgeschwindigkeit überschreitet. Dadurch können auch unnötige Aktionen vermieden werden, wie bei Messfehlern, Rauschen oder bei äußerst kleinen Geschwindigkeiten, die beispielsweise durch Schwingungen der Tür hervorgerufen werden. Beispielsweise muss bei einer Geschwindigkeit von 0,01 Grad/s oder einer Geschwindigkeit von 0,1 cm/s am Türgriff in der Regel keine Bremsung der Tür erfolgen.

In allen Ausgestaltungen wird vorzugsweise die Dämpfung vergrößert, wenn ein Hindernis in der Bewegungsbahn der Türeinrichtung/Tür erkannt wird und eine Kollision der Türeinrichtung oder Tür mit dem Hindernis insbesondere unmittelbar bevorsteht. Eine entsprechende sanfte Abbremsung bis zu dem Hindernis ist bevorzugt. Zur automatischen Erkennung von Hindernissen werden vorzugsweise bekannte Sensoren eingesetzt. Insbesondere werden Sensoren auf Ultraschallbasis, auf Radarbasis und/oder optische oder akustische Sensoren verwendet.

Vorteilhafterweise wird die Dämpfereinrichtung derart gesteuert, dass die Bewegungsgeschwindigkeit oder Drehgeschwindigkeit der Türeinrichtung/Tür so verläuft, dass ein geräuscharmes Schließen der Tür erreicht wird und/oder dass ein bestimmter Öffnungswinkel ohne abrupte Geschwindigkeitsänderungen erreicht wird. Die Steuerung erfolgt insbesondere so, dass die gewünschten Funktionen (gewünschter Öffnungswinkel, Stehen vor einem Hindernis, Stillstand an Endanschlag) wie gewünscht erreicht werden. In Kombination mit dem schnellen Schalten von magnetorheologischen Dämpfungsventilen kann so erreicht werden, dass die Geschwindigkeit der Türeinrichtung/Tür beispielsweise beim Schließvorgang schon kurz vor dem Schließen so gering wie möglich ist. Damit benötigt die Dämpfereinrichtung weniger Restenergie.

In weiteren bevorzugten Ausgestaltungen umfasst die Türkomponente wenigstens eine Sensoreinrichtung oder es ist wenigstens eine Sensoreinrichtung zugeordnet, um ein Maß für eine Position/Winkelstellung der bewegbaren Türeinrichtung bzw. der verschwenkbaren Tür zu erfassen. Die Steuereinrichtung ist dazu eingerichtet und ausgebildet, mit Sensordaten der Sensoreinrichtung einen Kennwert für eine Änderungsgeschwindigkeit der Bewegungsgeschwindigkeit/Drehgeschwindigkeit der Türeinrichtung/Tür zu bestimmen und bei einer Änderungsgeschwindigkeit über einen vorhergehenden Grenzwert hinaus die Dämpfereinrichtung von einer geringeren Dämpfung auf eine größere Dämpfung umzuschalten.

In dieser Ausgestaltung und auch in allen anderen Ausgestaltungen kann die Dämpfereinrichtung auch als Bremseinrichtung oder als Feststelleinrichtung bezeichnet werden.

Vorzugsweise ist die Dämpfereinrichtung als magnetorheologische Dämpfereinrichtung ausgeführt und die Dämpfung ist insbesondere über ein veränderbares Magnetfeld einstellbar. Eine magnetorheologische Dämpfereinrichtung hat erhebliche Vorteile, da sie eine extrem schnelle Umschaltung der Dämpfung von geringen auf starke Werte und umgekehrt ermöglicht. Vorzugsweise beträgt die Zeitdauer zur Umschaltung von der geringeren zu der größeren Dämpfung weniger als 50 ms. Insbesondere ist eine Umschaltung von einer minimalen Dämpfung zu einer maximalen Dämpfung und umgekehrt in weniger als 20 ms und vorzugsweise in weniger als 10 ms und besonders bevorzugt in weniger als 5 ms erreichbar. Durch ein solches extrem schnelles System kann flexibel und in Echtzeit auf alle Anforderungen reagiert werden.

Besonders bevorzugt wird die Dämpfung auf einen im Wesentlichen maximalen Wert eingestellt, wenn die Änderungsgeschwindigkeit den vorbestimmten Grenzwert überschreitet.

Die Dämpfung kann abgeschaltet oder auf einen geringen Wert reduziert werden, wenn die Drehgeschwindigkeit auf 0 reduziert wurde. Dabei wird unter einer Geschwindigkeit von 0 auch eine extrem geringe Restgeschwindigkeit verstanden, die beispielsweise durch Schwingungen auftritt, sodass laufend und abwechselnd minimalste Geschwindigkeiten in die eine und die andere Drehrichtung auftauchen.

Vorzugsweise umfasst die Dämpfereinrichtung wenigstens einen von einer magnetorheologischen Flüssigkeit gefüllten und steuerbaren Strömungskanal, wobei der Strömungskanal einem veränderbaren Magnetfeld aussetzbar ist, sodass der Strömungswiderstand des Strömungskanals und somit eine Dämpfung der Dämpfereinrichtung über ein stärkeres Magnetfeld in dem Strömungskanal stärker und über ein schwächeres Magnetfeld schwächer einstellbar ist.

In einer weiteren Ausgestaltung umfasst die Türkomponente umfasst eine steuerbare und ein magnetorheologisches Fluid als Arbeitsfluid enthaltende Dämpfereinrichtung. Die (magnetorheologische) Dämpfereinrichtung umfasst eine Kolbeneinheit und eine die Kolbeneinheit umgebende Zylindereinheit. Die Kolbeneinheit teilt ein Zylindervolumen der Zylindereinheit in zwei Kammern. Dabei ist die Kolbeneinheit mit einem ersten Einwegventil ausgerüstet. Die beiden Kammern sind über einen externen und mit wenigstens einem steuerbaren magnetorheologischen Dämpfungsventil ausgerüsteten Rückkanal miteinander zu einem Einwegkreislauf verbunden, sodass das magnetorheologische Fluid beim Einfahren und Ausfahren der Kolbeneinheit in die gleiche Strömungsrichtung (durch die Kolbeneinheit) strömt. Das bedeutet, dass die gleiche Strömungsrichtung durch das erste Drosselventil bzw. Dämpfungsventil vorliegt.

Eine solche Türkomponente hat viele Vorteile. Diese Konstruktion erlaubt eine Ausgestaltung, bei der nur geringe Kräfte die Tür in die eine oder die andere Richtung vorbelasten. Gleichzeitig kann bedarfsweise über eine schnelle Verstellung des Magnetfeldes bedarfsweise eine maximale Dämpfungskraft eingestellt werden, um Verletzungen an eingeklemmten Körperteilen zu vermeiden oder zu verringern.

Vorzugsweise ist auf einer Niederdruckseite des Dämpfungsventils ein Ausgleichsvolumen vorgesehen. Ein solches Ausgleichsvolumen dient insbesondere dazu, das Volumen einer einfahrenden Kolbenstange auszugleichen. Möglich ist es aber auch, dass die Kolbeneinheit eine durchgehende Kolbenstange oder zwei Kolbenstangen aufweist, die an beiden Enden aus der Zylindereinheit nach außen geführt werden. Wird beispielsweise eine durchgehende Kolbenstange verwendet, so ändert sich durch eine Relativbewegung der beiden Anschlusseinheiten zueinander das Volumen nicht und von daher muss keine Ausgleichseinrichtung oder ein Ausgleichsvolumen für das Volumen der Kolbenstange vorgesehen werden. Aber auch in solchen Fällen können Ausgleichsvolumen vorteilhaft sein, um beispielsweise einen Ausgleich bei schwankenden Temperaturen (Temperaturausgleich) zu Verfügung zu stellen. Ein solches Ausgleichsvolumen kann als Temperaturausgleichsvolumen bezeichnet werden.

Wird hingegen keine durchgehende Kolbenstange eingesetzt, so wird beim Eintauchen der Kolbenstange in die Zylindereinheit das zur Verfügung stehende Volumen verkleinert, sodass das dort vorher vorhandene Dämpfungsfluid verdrängt wird. Wird das Ausgleichsvolumen auf der Niederdruckseite des Dämpfungsventils angeordnet, so wird eine deutlich geringere Rückstellkraft durch das vorgespannte Ausgleichsvolumen erzeugt. Dadurch ist eine Bewegung in beide Schwenkrichtungen einfacher, als wenn das Ausgleichsvolumen auf der Hochdruckseite des Dämpfungsventils angeordnet ist.

Vorzugsweise weist auch bei dieser Ausgestaltung das Dämpfungsventil wenigstens einen von einer magnetorheologischen Flüssigkeit durchströmbaren Strömungskanal auf, wobei der Strömungskanal einem veränderbaren Magnetfeld aussetzbar ist, sodass der Strömungswiderstand des Strömungskanals und somit eine Dämpfung der Dämpfereinrichtung über das Magnetfeld in dem Strömungskanal beeinflussbar ist.

Es ist bevorzugt, dass eine erste Kammer der beiden Kammern mit dem Dämpfungsventil und dass das Dämpfungsventil über ein zweites Einwegventil in Strömungsverbindung mit der zweiten Kammer steht bzw. verbunden ist. Dabei kann die Strömungsverbindung jeweils mittelbar oder unmittelbar erfolgen. Das zweite Einwegventil erlaubt vorzugsweise nur Strömung in die zweite Kammer hinein. Durch das erste Einwegventil wird nur eine Strömung von der zweiten Kammer durch den Kolben in die erste Kammer erlaubt.

In allen Ausgestaltungen ist es bevorzugt, dass eine Ausgleichskammer mit einem vorgespannten Ausgleichsvolumen vorgesehen ist, wobei das Ausgleichsvolumen mit dem Dämpfungsventil und der zweiten Kammer verbunden ist. Die Ausgleichskammer kann auch in dem Strömungsweg zwischen dem Dämpfungsventil und der zweiten Kammer angeordnet sein.

In einer weiteren Ausgestaltung weist die Türkomponente wenigstens eine steuerbare und ein magnetorheologisches Fluid als Arbeitsfluid enthaltende Dämpfereinrichtung auf und umfasst zwei relativ zueinander bewegbare Anschlusseinheiten, wobei eine der beiden Anschlusseinheiten mit einer Tragkonstruktion und die andere der beiden Anschlusseinheiten mit einer bewegbaren Türeinrichtung und insbesondere einer verschwenkbaren Tür insbesondere eines Fahrzeugs verbindbar ist, um eine Bewegung der Türeinrichtung oder eine Schwenkbewegung der Tür wenigstens teilweise zwischen einer Schließstellung und einer zum Beispiel auch maximalen Öffnungsstellung mit einer Steuereinrichtung gesteuert zu dämpfen. Dabei umfasst die magnetorheologische Dämpfereinrichtung eine Kolbeneinheit und eine die Kolbeneinheit umgebende Zylindereinheit. Die Kolbeneinheit teilt ein Zylindervolumen in zwei Kammern. Dabei weist die Kolbeneinheit eine sich durch die erste Kammer erstreckende erste Kolbenstange und eine sich durch die zweite Kammer erstreckende zweite Kolbenstange auf.

Auch diese Türkomponente hat viele Vorteile und ermöglicht eine Ausgestaltung, bei der die Tür in beide Richtungen praktisch drucklos bewegt werden kann.

Vorzugsweise werden beide Kolbenstangen jeweils aus dem Zylindervolumen und/oder der Zylindereinheit nach außen geführt. Möglich ist es aber auch, dass eine der Kolbenstangen teleskopierbar ausgebildet ist und an einer Seite an dem Kolben befestigt und an der anderen Seite mit der Zylindereinheit fest verbunden ist. Die teleskopierbaren Teile der teleskopierbaren Kolbenstange sind insbesondere abgedichtet zueinander. Bei einer solchen Ausgestaltung ist ebenfalls kein Volumenausgleich für eine Eintauchen der Kolbenstange nötig. Ein Temperaturausgleich ist vorzugsweise vorgesehen.

In allen Ausgestaltungen ist es bevorzugt, dass die erste und die zweite Kolbenstange jeweils den gleichen Durchmesser aufweisen. Möglich ist es aber auch, dass die beiden Kolbenstangen einen unterschiedlichen Durchmesser aufweisen. Beispielsweise kann über ein entsprechendes Durchmesserverhältnis eine entsprechende Vorbelastungskraft zum Ein- oder Ausfahren eingestellt werden.

Vorzugsweise ist die Dämpfereinrichtung mit einem steuerbaren Dämpfungsventil mit einem von einer magnetorheologischen Flüssigkeit durchströmbaren Strömungskanal ausgerüstet. Der Strömungskanal ist einem veränderbaren Magnetfeld aussetzbar, sodass der Strömungswiderstand des Strömungskanals und somit eine Dämpfung der Dämpfereinrichtung über das Magnetfeld in dem Strömungskanal beeinflussbar ist.

Es ist bevorzugt, dass die Dämpfereinrichtung wenigstens eine Ausgleichseinrichtung mit einem Ausgleichsvolumen insbesondere zum Beispiel zum Ausgleich von Temperaturschwankungen umfasst.

Vorzugsweise umfasst die Ausgleichseinrichtung ein komprimierbares Ausgleichsvolumen. Ein solches Ausgleichsvolumen kann durch eine schwammartige Struktur eine Gummiblase oder einen abgeschlossenen und flexiblen Luftbehälter gebildet werden.

Es ist bevorzugt, dass wenigstens eine der beiden Kolbenstangen als elektrische Anschlusseinheit dient. Dann ist es möglich, dass an der Kolbenstange wenigstens ein Anschlusskabel geführt wird. Möglich ist es auch, dass an oder in beiden Kolbenstangen Anschlusskabel geführt werden. Die Anschlusskabel oder das Anschlusskabel kann in oder an der Kolbenstange geführt werden. Möglich ist es, das über ein Kabel der benötigte elektrische Strom zugeführt wird und dass darauf moduliert Signale übertragen werden.

Es ist bevorzugt, dass wenigstens eine der beiden Kolbenstangen außerhalb der Zylindereinheit in einer mit wenigstens einem Schlitz ausgerüsteten Rohr verschiebbar aufgenommen ist. Dann ist es bevorzugt, dass in dem Schlitz das Anschlusskabel herausgeführt wird. Vorzugsweise ist das Rohrteil Bestandteil einer der Anschlusseinheiten oder fest damit verbunden.

In allen Ausgestaltungen ist es bevorzugt dass die Dämpfereinrichtung wenigstens eine Messeinrichtung umfasst, wobei insbesondere ein Teil der Messeinrichtung an der Kolbenstange befestigt ist. Bei einer solchen Messeinrichtung wird über eine Linearbewegung der Dämpfereinrichtung ein Maß für eine Schwenkbewegung der Tür erfasst. Da eine feste Zuordnung von Winkel und Linearposition vorliegt, kann aus der absoluten Position der Kolbenstange relativ zur Zylindereinheit auf die Schwenkposition der Tür zurückgeschlossen werden. Entsprechend kann aus den Signalen der Messeinrichtung auf eine Drehgeschwindigkeit der Tür geschlossen werden. Und aus den Signalen der Messeinrichtung kann auch auf eine Verzögerung der Beschleunigung der Türverschwenkung geschlossen werden. Als Sensor kann insbesondere ein Rad oder Reibrad eingesetzt werden, welches z. B. an der Kolbenstange anliegt und eine Relativbewegung der Kolbenstange erfasst.

In allen zuvor beschriebenen Ausgestaltung ist es bevorzugt, dass die Türkomponente die Tür umfasst. Möglich ist es auch dass die Türkomponente die Tragkonstruktion umfasst.

Die Sensoreinrichtung erfasst vorzugsweise ein Maß für einen Schwenkwinkel der Tür und/oder ein Maß für Relativposition der Anschlusseinheiten zueinander.

In allen Ausgestaltungen ist es bevorzugt, dass wenigstens ein Lagesensor zugeordnet ist, der ein Maß für eine horizontale Ausrichtung bzw. ein Maß für eine Abweichung von der horizontalen Ausrichtung des Fahrzeugs erfasst. Dann kann die Steuereinrichtung in Abhängigkeit von der Abweichung von der horizontalen Ausrichtung die Dämpfung der Dämpfereinrichtung steuern. Beispielsweise ist es sinnvoll, eine geöffnete Tür anders zu dämpfen, wenn das Fahrzeug an einem steilen Hang steht und die Tür zuzufallen - oder bei anderer Orientierung des Fahrzeugs - aufzufallen droht.

In allen Ausgestaltungen ist es auch bevorzugt, wenigstens einen Lastsensor zur Erfassung einer auf die Tür aufgebrachten Last zuzuordnen. Mit einem solchen Lastsensor kann beispielsweise ein auf die Tür aufgebrachtes Biegemoment erfasst werden.

Bevorzugt ist es weiterhin, wenigstens einen Nahfeldsensor zuzuordnen oder die Signale eines Nahfeldsensors zu verwenden, um Hindernisse in der Umgebung zu erkennen.

In allen Ausgestaltungen ist es möglich, dass mittels der Steuereinrichtung ein virtuelles Raster erzeugt wird, sodass der Benutzer beim -Öffnen oder Schließen der Tür in bestimmten Winkelschritten beispielsweise 5° oder 10° oder sonstigen Wegschritten Rasterpunkte fühlt, während der Benutzer die Tür öffnet oder schließt.

In allen Ausgestaltungen und Weiterbildungen ist es bevorzugt, dass eine elektrische Spule innerhalb der Zylindereinheit angeordnet ist. Insbesondere ist die elektrische Spule in dem Kolben der Kolbeneinheit angeordnet und ist dort als sogenannte liegende elektrische Spule angeordnet. Das bedeutet, dass die Spulenachse quer zu der Längserstreckung der Zylindereinheit bzw. quer zu einer Relativbewegung des Kolbens ausgerichtet ist. Die Spulenachse ist insbesondere auch quer zur Strömungsrichtung des magnetorheologischen Dämpfungsmediums ausgerichtet. Dadurch wird eine besonders effektive Arbeitsweise erreicht. Eine elektrische Spule in der Kolbeneinheit wird vorzugsweise bei Dämpfereinrichtungen eingesetzt, die eine Kolbenstange oder zwei Kolbenstangen oder eine durchgehende Kolbenstange aufweisen. Bei einer Dämpfereinrichtung mit einem Einwegkreislauf wird das Dämpfungsventil hingegen vorzugsweise außerhalb des Kolbens und außerhalb der Dämpferkammern angeordnet.

In einer Ausgestaltung umfasst eine MRF-Dämpfereinrichtung einen luft-/gasbeaufschlagtem Trennkolben und somit ein vorgespanntes Kolbenstangenausgleichsvolumen. Dadurch entsteht ein sehr einfacher und kostengünstiger Aufbau. Durch die Vorspannung fährt die Kolbenstange mit einer Kraft selbstständig aus. Abhängig vom Vorspanndruck (Luftdruck im Kolbenstangenausgleichsvolumen) und der Türkinematik öffnet sich die Türe damit selbstständig. Während beim Öffnen der Türe die Dämpfkraft über die Stromvorgabe angepasst werden kann, kann beim Schließen der Türe nur eine - abhängig vom Vorspanndruck im Kolbenstangenausgleichsvolumen - begrenzte (reduzierte) Dämpfkraft erzeugt werden.

Das System bzw. die Lage des Trennkolbens kann auch "umgedreht" werden, d.h. die Kolbenstange fährt dann selbstständig ein. Abhängig vom Vorspanndruck im Kolbenstangenausgleichsvolumen kann eine begrenzte (reduzierte) Dämpfkraft beim Öffnen erzeugt werden.

In einer Variante wird eine MRF-Dämpfereinrichtung eingesetzt, bei der das Kolbenstangenausgleichsvolumen und somit das Vorspannvolumen sowohl beim Öffnen als auch beim Schließen auf der Niederdruckseite liegt (beidseitig fast kraftfrei). Somit ist die Vorspannkraft (wenige Newton) bzw. das selbstständige Verfahren minimal und die Erzeugung der vollen Dämpfkraft in beide Bewegungsrichtungen (Zug- und Druckseite bzw. Öffnen und Schließen) möglich.

Die Türkomponente bietet auch z.B. bei einem Stromausfall (z.B. nach einem Unfall) erhebliche Vorteile. Ein wichtiger Punkt ist auch, dass das Fail-Safe-Verhalten so konfiguriert werden kann, dass die Türe im Falle eines Unfalles, einfach und mit wenig Kraft zu öffnen ist. Zum Öffnen sollte dabei lediglich die Grunddämpfung überwunden werden.

Bei konventionellen Systemen ist das ein Problem. Wird eine niedere Grundkraft stromlos erzeugt, so wird für die hohe Haltekraft (Dämpfkraft) viel Strom benötigt. Bei einem Unfall lässt sich die Tür so gut öffnen. Steht das Fahrzeug aber länger mit geöffneter Tür z.B. in der Hanglage, so wird zum Halten der Tür viel Strom benötigt. Steht das Fahrzeug über Nacht in diesem Zustand, so ist am Morgen die Batterie leer. Ein dauernder Verbraucher, mitunter auch noch 4 x (vier Türen), geht praktisch nicht. Viele Fahrzeuge schalten jetzt schon den Motor und die Verbraucher nach wenigen Minuten ab.

Wird hingegen die hohe Grundkraft stromlos erzeugt (z.B. über einen Permanentmagnet), so kann im Fall einen Unfalles die Tür nicht mehr geöffnet werden. Besonders wenn Kinder auf den Hintersitzen sitzen oder wenn Personen verletzt sind, müssen die Türen mit minimaler Kraft geöffnet werden können.

Eine Lösung wäre es, mit einem Permanentmagnet nicht die volle Dämpfkraft zu generieren, was wiederum bei Kindern bei einem Unfall (immer noch zu schwergängig) oder bei Schrägparklage (Haltekraft reicht nicht aus) kritisch werden kann.

Eine weitere Lösung wäre ein Stromspeicher, der die hohe Haltekraft nach dem Unfall reduziert. Ein Nachteil ist der hohe Preis. Ein weiterer Nachteil ist, dass auch damit nicht sicher gestellt werden kann, dass dieser nach einem Unfall noch richtig funktioniert bzw. den notwendigen Strom lange genug bereitstellen kann (er muss das Öffnen auch noch detektieren).

Die Erfindung bietet hier eine optimale Lösung.

Ein weiterer Vorteil ist, dass die Türe durch den Benutzer in jede beliebige Position bezüglich des Öffnungswinkels gebracht werden kann. Dies kann durch ein fortlaufendes Führen der Türe, durch den Benutzer, bis zum angestrebten Endwinkel oder durch ein Stoßen durch den Benutzer erfolgen.

Die Rastfunktion des Systems hält dann die Türe im entsprechenden Öffnungswinkel. Dabei spielt es keine Rolle, ob sich das Fahrzeug als Ganzes auf einer horizontalen- oder schiefen Ebene befindet. Der Benutzer hat jedoch die Möglichkeit, aus dieser Rastfunktion heraus die Türe anschließend weiter zu öffnen oder zu schließen. Eine denkbare Erweiterung der Rastfunktion beinhaltet, dass die Türe aus der Ruhelage der Rastfunktion heraus, in Öffnungsrichtung leichter wegbewegbar ist als in Schließrichtung (einseitig wirkender Aktor). Sowohl auf einer horizontalen- als auch auf einer schiefen Ebene. Im Allgemeinen bedarf es dazu der Erkennung des "Bedarfes" eines Öffnungs- oder Schließvorgang durch den Benutzer.

Es ist möglich:
∘ Wenn gegen die Türe gedrückt wird, ergibt sich ein spezifisches Lastmoment. Dies bewirkt je nach Ausprägung eine Bewegung der Türe. Diese kann mit Hilfe von geeigneten Sensoren (z.B. Weg, Geschwindigkeit, Beschleunigung) an geeigneten Stellen (am Aktor, am Drehpunkt der Türe, am Türgriff etc.) erkannt/gemessen werden. Wird dabei ein bestimmter Grenzwert überschritten, so wird/darf der Öffnungs- bzw. Schließvorgang eingeleitet werden.
∘ Befindet sich das Fahrzeug auf einer schiefen Ebene, so entstehen auf Grund der wirkenden Massen auf das dämpfende System erhöhte Lastmomente/Grundmomente in der Rastposition. Entsprechend wird das vorzugsweise berücksichtigt. Z.B. über eine Erhöhung der Schwellwerte für das Auslösen eines Öffnungs- oder Schließvorganges. Die adaptive Anpassung der Schwellwerte kann über die Information der Fahrzeugneigung erfolgen, welche einfach sensortechnisch erfasst werden kann.
∘ Eine weitere Möglichkeit, einen Öffnungs- oder Schließvorgang zu erkennen, sind Berührungs-, Abstandssensoren jeglicher Art an der Außen- und Innenschale der Türe (kapazitiver-, induktiver-, optischer Sensor, Sitzerkennungssensor (befindet sich der Benutzer auf dem Sitz oder nicht)). Damit kann bei Annäherung einer Hand oder eines Objektes oder bei der Berührung mit der Hand oder anderen Objekten festgestellt werden, ob ein Öffnungs- oder Schließvorgang erlaubt werden soll.

Außerdem kann die Verarbeitung der Informationen in Nahfelderkennungssystemen erfolgen.

Sämtliche oben genannten Informationen sind auch dahingehend verwendbar, dass erkannt werden soll, ob der Benutzer die Türe als Ausstiegshilfe verwenden will. Auch hier spielt es eine entscheidende Rolle ob sich das Fahrzeug auf einer horizontalen- oder schiefen Ebene befindet. Das kann entsprechend den oben genannten Methoden berücksichtigt werden.

Vorzugsweise wird ein sanftes Öffnen und Schließen der Türe ermöglicht.

Die Rastfunktion kann genutzt werden, sodass, wenn die Türe durch den Benutzer aufgestoßen oder zugestoßen oder geführt in eine der beiden Richtungen bewegt wird, stets ein sanftes Hinbewegen zum angestrebten Türwinkel erfolgt. Beim Schließen der Türe bspw. würde die Türe immer sanft an einem definierten Öffnungswinkel zu stehen kommen. Wobei beim Schließen, dann später mechanische oder elektromechanische Komponenten das finale Schließen und Fixieren der Türe übernehmen. Ebenso beim Öffnen der Türe; unabhängig vom Impuls/dem Kraftstoß/der Anfangsgeschwindigkeit/ der Führungskraft, welche die Türe erfährt, erfolgt stets ein sanftes Öffnen hin zum gewünschten Öffnungswinkel.

Beim gewünschten Öffnungswinkel kann es sich dabei um
- den maximalen Öffnungswinkel handeln. Dabei wird durch den ständig unter allen Umständen gewährleisteten sanften Öffnungsvorgang neben dem Komfort weiter gewährleistet, dass das maximal herrschende Moment beim maximalen Öffnungswinkel derart begrenzt wird, dass eine plastische Verformung oder grundlegende Überbeanspruchung der AB-Säule vermieden werden kann. Sowohl für Lastfälle, in denen sich das Fahrzeug auf einer horizontalen als auch auf einer schiefen Ebene befindet.
- jeglichen Winkel innerhalb des Arbeitsbereiches handeln.

Dieser kann variieren auf Grund von
- manuellen Benutzerdefinitionen oder
- automatisierten funktionellen Erweiterungen wie bspw. im nächsten Aufzählungspunkt beschrieben.

Weiter kann durch ein sanftes Öffnen oder Schließen der Türe der Verschleiß minimiert werden; durch Minimieren von Lastspitzen oder durch Vermeidung von verschleißsteigernden Arbeitsbereichen.

Es ist möglich, einen virtuellen Anschlag auf Grund von Hindernissen im Arbeitsbereich (möglicher maximaler Öffnungswinkel der Türe) zur Verfügung zu stellen:
Mit Hilfe von geeigneter Sensorik oder aus Informationen der Nahfelderkennung kann erkannt werden, ob sich ein Hindernis im Arbeitsbereich der Türe befindet. Für die Nahfelderkennung können dabei bspw. Kamerasysteme (unter der Türschwelle oder Top-View) oder ähnliche Systeme verwendet werden; zudem bspw. Abstandssensoren etc. Auf Grund jener Information kann ein virtueller Anschlag umgesetzt werden. Dabei wird der maximal erlaubte Öffnungswinkel auf Grund der oben genannten Information aus der Platzierung des Störobjektes berechnet/definiert. Auf Basis des neuen maximal möglichen Öffnungswinkels, werden die oben (in allen vorigen Punkten) beschrieben Funktionen mit reduziertem Öffnungswinkel umgesetzt. Dabei ist auch denkbar, dass neben dem maximal möglichen Öffnungswinkel ein Sicherheitsabstand berücksichtigt wird. Weiter kann (muss aber nicht) nach Erreichung des Sicherheitsabstandes zum störenden Objekt eine Rasterfunktion jeglicher Ausprägung/Granularität hinterlegt werden, mit welcher eine feine stufenweise Annäherung bis unmittelbar hin zum störenden Objekt ermöglicht wird.

Umsetzbar ist auch eine Blockierfunktion, welche eingreift, wenn sich Objekte aller Art dem Arbeitsbereich der Türe nähern (bspw. herannahender Fahrradfahrer), bevor diese geöffnet wird/werden will. Die Information kann auf Basis geeigneter Sensorik bzw. auf Basis der Informationen der Nahfelderkennung generiert werden. Das System verarbeitet diese Information derart, dass ein Öffnen der Türe auf Grund der adaptiven Dämpfung vermieden wird.

Ein weiterer Vorteil der Umsetzung mit MRF-Aktoren ist, dass auf Grund der Adaptivität auf Umwelteinflüsse sämtlicher Ausprägungen reagiert werden kann:
∘ Verschleißerscheinungen im System (z.B. erhöhte Türreibung mit steigendem Alter, etc.).
∘ Es kann auch die Temperaturabhängigkeit der Türreibung kompensiert werden. So kann die Temperatur in den Türlagerstellen berücksichtigt werden.
∘ Äußere Einflüsse können kompensiert werden. So kann einwirkender Wind kompensiert werden. Es kann z. B. auch eine Schneelast auf der Heckklappe kompensiert werden.
∘ Beladung (wenn mehrere Leute im Fahrzeug sitzen funktioniert die Entlüftung vom Innenraum nicht mehr so gut.
∘ Fenster offen oder zu: bei geöffneten Fenstern lassen sich die Türen leichter schließen.
∘ Fahrzeugentlüftung: altersbedingt kann diese verstopfen, wodurch das Schließen der Türen schwerer geht.
∘ Fahrzeug befindet sich in einer schiefen Ebene (erhöhte Kräfte auf Grund der beteiligten Massen)
∘ Wind
∘ Störgrößen im Allgemeinen, in welcher Ausprägung auch immerAuf Grund aller oben genannten Einflüsse verändert sich das Verhalten des Systems gegenüber dem Grundzustand/mit dem Alter/mit der Zeit/auf Grund temporärer Umstände (z.B. schiefe Ebene). Allenfalls können aber diese Einflüsse erfasst und berücksichtigt werden.

Die Erfassung erfolgt über (intelligente) Algorithmen welche das Systemverhalten beobachten; in Kombination mit geeigneter Sensorik. Die Regelungsstrategien - sowie in allen Punkten oben beschrieben - können derart angepasst werden, dass das Systemverhalten als Ganzes immer gleich bleibt; respektive sich für den Benutzer immer gleichbleibend anfühlt.

Idealerweise schließt die Tür immer sanft und mit einem satten Geräusch. Hierzu wird die Verfahrgeschwindigkeit entsprechend geregelt. Ändern sich z.B. die Türdichtungen (quillen auf...), das Auto ist verzogen (nach einem Unfall oder ein Rad steht auf dem Gehsteig), das Scharnier hat kurz vor der Schließstellung eine erhöhte Reibung, änderst sich die notwendige Schließkraft (sie wird höher).

Mit der Möglichkeit der adaptiven Anpassung der Dämpfung ergeben sich eine Vielzahl an Möglichkeiten zur Steigerung des Komforts oder der Steigerung der Performance, etc.:
∘ Mittels geeigneter Sensorik oder auf Basis der Informationen der Nahfelderkennung, oder bspw. durch einen Sensor im Schlüssel mit Personeninformation oder durch im Fahrzeug befindliche Kameras kann bspw. erkannt werden, welcher Fahrer sich als Benutzer am System befindet. Damit kann die Ausprägung sämtlicher oben beschriebenen Funktionalitäten an den aktuellen Benutzer angepasst werden (z.B. adaptive Anpassung des Momentes zur Erkennung des "Bedarfes" eines Öffnungs- oder Schließvorganges; bspw. Unterscheidung Mann/Frau).
∘ Weiter kann softwaretechnisch, auf Basis der Anpassung von Systemparametern der Regelung, adaptiv auf sämtliche Gegebenheiten reagiert werden ohne im Betrieb oder in der Fertigung irgendwelche mechanischen Anpassungen durchführen zu müssen
   - Vordertüre / Hintertüre
   - Unterschiedliches Fahrzeugmodell

Mit einer einfachen Konfiguration des Systems kann erreicht werden, dass z.B. beide Hintertüren während der Fahrt, oder auch im Stillstand, nicht geöffnet werden dürfen. Dies kann auch dynamisch abhängig davon erfolgen, was für Benutzer sich auf der Rückbank befinden. Diese kann mittels geeigneter Sensorik oder auf Basis der Informationen der Nahfelderkennung oder bspw. durch einen Sensor im Schlüssel mit Personeninformation oder durch im Fahrzeug befindliche Kameras erkannt werden.

Im Allgemeinen kann das Öffnen der Türen während des Fahrens verhindert werden, oder nur unter bestimmten Fahrzeuggeschwindigkeiten erlaubt oder erschwert erlaubt werden.

Oder falls die Türe unter dem Fahren geöffnet wird, kann eine geeignete Dämpfungsmaßnahme eingeleitet werden (z.B. Blockieren der Türe gegen Rückschlagen nach dem Abbremsvorgang).

Diebstahlschutz: Vorige Funktionen können auch als Diebstahlschutz verwendet werden (ein ungewünschtes Ein- und Aussteigen ist nicht mehr möglich). Vorteil hierbei auch: Es können so auch keine Gegenstände aus dem Fahrzeug entwendet werden (nur durch Einschlagen der Scheiben).

Im Falle des Detektierens von nicht spezifizierbaren Hindernissen im Arbeitsbereich (z.B. leichter Schnee) aus der allgemeinen Sensorik oder aus Informationen der Nahfelderkennung, soll das System bspw. ein angepasstes Öffnen der Türe zur Verfügung stellen. Im Falle derartiger Unsicherheiten, könnte das System bspw. von Beginn an des Öffnungsvorganges eine feingranulare Rasterfunktion zur Verfügung stellen. Somit erfährt der Benutzer über das automatisch generierte haptische Feedback die Rückmeldung, dass sich nicht zuordenbare (nur bedingt schädigende) Hindernisse im Arbeitsbereich befinden.

Weiter kann neben einem maximalen Öffnungswinkel auf Grund von Hindernissen im Arbeitsbereich für den Öffnungsvorgang der Türe, ebenso ein maximaler Schließwinkel auf Grund von Hindernissen im Arbeitsbereich für den Schließvorgang berücksichtigt werden (virtueller Endanschlag beim Schließen). Somit können neben Sachschäden am Fahrzeug (auf Grund von Hindernissen wie bspw. Getränkekisten) während des Schließvorganges auch Personenschäden vermieden werden; bspw. einklemmen von Fingern oder Händen. Im Allgemeinen wird jedoch ein schmerzhaftes/schadenbringendes Einklemmen von bspw. Fingern/Händen bereits durch die Komfortfunktion des sanften Schließens unterstützt. Da diese Funktion die Türe bereits in allen Fällen mit wenig Restenergie (Restgeschwindigkeit) vor der Rastfunktion zum Stehen bringt.

Einklemmschutz: Hier kann ein Algorithmus bzw. eine Regelung bei einer unüblichen Geschwindigkeitsreduktion kurz vor der geschlossenen Türstellung schlagartig einen hohen Strom auf den Aktor geben, sodass dieser Türe insbesondere so schnell/stark wie möglich gebremst wird. Die schnelle Reaktionszeit des Aktors hilft dabei sehr. Bei 0,5m/sec Verfahrgeschwindigkeit ergeben sich 0,5mm/ms und somit kommt bei einer Reaktionszeit von 6ms die Türkomponente innerhalb von 3mm zum Stillstand.

Schadensminimierung: Die Sensorik erkennt kein Hindernis und die Tür soll ungehindert öffnen. Der Wegsensor überwacht das Öffnen und stellt eine untypisches Verfahren fest (z.B. starkes Abbremsen wegen einem nicht erkannten Hindernis wie ein niederer Pfosten in der Mitte der Tür). Der "MRF Notstop" bremst voll (wie zuvor beschrieben beim "Einklemmschutz"; 0,1m/sec Verfahrgeschwindigkeit = 0,1mm/ms = bei 6ms ergibt 0,6mm bis zum Stillstand) und reduziert aufgrund der sehr schnellen Reaktionszeit so den Schaden (evtl. wird das Blech dadurch nur elastisch verformt...).

Auch wichtig bei Schnee, Sträuchern, Ästen..., also schwer detektierbaren Hindernissen.

Diverse Gegebenheiten von Umgebungseinflüssen können berücksichtigt werden. Bspw. kann der Fall zu Stande kommen, dass sich während der Abwesenheit des Benutzers im Fahrzeug, ein weiteres Fahrzeug neben das eigene parkt, welches beim Verlassen noch nicht anwesend war. In diesem Fall sollte gewährleistet werden, dass die allgemeine Sensorik oder die Informationen der Nahfelderkennung vor dem Öffnen der Türe, den maximalen Öffnungswinkel rechtzeitig an das SDS-System übergeben. Wird dieser Wert vor dem Öffnen der Türe nicht angepasst (wird bspw. der letzte Wert vor dem Verlassen des Fahrzeuges verwendet), so kann ein Schaden, welcher Art auch immer, entstehen. Deshalb wird es nötig sein, Konzepte zu finden, welche derartige Information fortlaufend (auch im "Nicht-Betrieb" des Fahrzeuges) aktualisieren. Das kann bspw. über eine reduzierte Bearbeitung (zur Energiebedarfsreduzierung) der entsprechenden Sensorik und/oder Algorithmen und/oder Nahfelderkennungssysteme in Form einer Stand-By-Funktion erfolgen. Allenfalls ist es bevorzugt, dass es vor dem erstmaligen Betätigen der Türe erfolgt; die Vorlaufzeit hängt dabei ab von der Performance der Algorithmen/Sensorik, welche den maximalen Öffnungswinkel ermitteln/messen. Es ist bevorzugt, dass bei Betätigung des Türschlosses Hindernisse neu detektiert werden.

Möglich sind Sensoren u.a. am Außenspiegel, am Türschweller, unter dem Blech, innen oder auch außen. Die Sensoren können am Fensterrahmen vertikal angebracht werden.

Bei Einsatz von Remanenz können zwei Magneteinrichtungen eingesetzt werden, von denen die erste Magnetfeldeinheit eine Magnetfeldeinheit mit Stahlkern, Spule und Strömungskanal ist. Die zweite Magnetfeldeinheit ist ein Remanenzsystem mit Remanenzmaterial im Kern oder/und im Rest des Magnetkreises. Wird über eine längere Zeit eine hohe Dämpfkraft benötigt, so wird das Remanenzmaterial durch einen entsprechenden Stromimpuls (oder Stromimpulsverlauf) aufmagnetisiert. Nach dem erneuten Anlegen eines Stromimpulses oder Stromimpulsverlaufs wird das Magnetfeld wieder reduziert oder komplett aufgehoben. Bei geschlossener Tür kein Remanenzfeld, somit ein leichtes Öffnen beim Unfall möglich.

Bei Strömen von z. B. 0 bis 3 Ampere kann das Magnetfeld wie in einer "normalen" Magnetfeldeinheit erzeugt werden. Zunehmender Strom = größeres Magnetfeld = größere Dämpferkraft. Dies alles stufenlos und sehr schnell (< 10ms).

Stromimpulse oder Stromimpulsverläufe von z.B. 5 bis 6 Ampere magnetisieren das Remanenzmaterial um, wodurch ein bleibendes Magnetfeld verbleibt. Dadurch kann ohne Stromzufuhr eine (hohe) Haltekraft erzeugt werden.

In allen Ausgestaltungen kann auch ein aktives System Anwendung finden.

Dabei tritt folgende Problematik auf. Das automatische Öffnen und Schließen der Türen, wie es heute beim Kofferraum ist, wird kommen. Der Einsatz der jetzigen Kofferraumschließmechanismen (Spindeltriebe) in der Fahrer- oder Beifahrertür wird nicht gewünscht, da diese viel zu langsam sind (der Kunde will nicht mehrere Sekunden warten, bis er einsteigen kann) und sehr laut sind. Bei einem Unfall kann das System zudem nicht geöffnet werden (stromlos sehr hohe Kräfte notwendig). Verformt sich dann noch der Spindeltrieb, geht die Türe gar nicht mehr auf. Zudem sind die Türkräfte im Vergleich zum Kofferraumdeckel sehr hoch (Schräglage des Autos - 100Nm). Beim Kofferraumdeckel hilft eine Gasfeder bzw. die Schwerkraft beim Schließen.

In allen Ausgestaltungen ist es möglich, Stickstoff oder Argon oder großmolekulare Gase, welche weniger flüchtig sind, als Aktormedium oder als kompressibles Medium im z. B. Ausgleichsvolumen zu verwenden.

Gasdämpfer aus dem Stand der Technik haben bei Fahrzeugen generell das Problem, dass sich aufgrund der Temperaturen die Kräfte stark ändern (Gasvolumen; tiefe Temperaturen - weniger Druck; hohe Temperaturen - höherer Druck). Dadurch ergeben sich Unterschiede im Verhalten. Bei der Erfindung mit einer magnetorheologischen Dämpfereinrichtung wird vorzugsweise eine Temperaturkompensation durchgeführt. In allen Ausgestaltungen ist es deshalb bevorzugt möglich, eine (Außen-) Temperatur zu kompensieren. Dazu kann z. B. die elektrische Spule zusätzlich bestromt und damit die Dämpfereinrichtung beheizt werden. Es kann aber auch eine separate Heizeinrichtung (nur für tiefe Temperaturen) eingebaut werden, beispielsweise ein Heizdraht, eine Heizhülle um die Dämpfereinrichtung etc. Die Aktivierung der Heizeinrichtung kann dann z. B. erfolgen, wenn der Benutzer in die Nähe des Fahrzeuges kommt, also frühzeitig (Keyless Go...) oder die Tür benutzt. Die Heizeinrichtung kann aber auch programmiert werden (z.B. morgens...).

Vorzugsweise umfasst die Türkomponente ein elektrisches Schloss. Es ist ein sanftes Schkließen "Soft-Close" möglich, wobei die Tür in den letzten Millimetern selbsttätig schließt. Dieses wird vorzugsweise umgekehrt angesteuert, d. h. die Tür wird freigegeben (und das Schloss geöffnet). Vorzugsweise wird die Tür dann automatisch geöffnet, indem z. B. der adaptive Dämpfer die Tür aufdrückt. So kann der Fahrer mit dem Smartdevice (Handy, Smartwatch...) oder einem Funkschlüssel die Tür zum Einsteigen öffnen. Er muss hierzu die Tür nicht berühren, was neben dem größeren Komfort auch den Vorteil hat, dass er sich die Hände nicht schmutzig machen kann , da der Benutzer die Tür ja zum Öffnen nicht mehr berühren muss. Denkbar ist auch, dass der Benutzer die Tür mittels Gestensteuerung öffnet (z. B. Fussbewegung bei/unter der Tür), was dann vorteilhaft ist, wenn er die Hände voll hat (z. B. nach einem Einkauf). Zudem kann der Benutzer dann, besonders wenn er von hinten (Heck) zum Fahrzeug kommt, direkt einsteigen.

Es ist möglich, nur eine Tür (z. B. die Fahrertür oder die Fondtüren) mit der Erfindung auszurüsten.

Bei den derzeitigen Fahrzeugen aus dem Stand der Technik sind mitunter die Türscharniere so angebracht (Türkinematik), dass die Tür in eine Richtung leichter geht als in die andere. Dies kann mit der erfindungsgemäßen Türkomponente ausgeglichen werden.

Nun kann ein aktives System mit einer MRF-Pumpe eingesetzt werden, bei der ein MRF-Ventil als Pumpe eingesetzt wird. Der Antriebsmotor kann in beide Antriebsrichtungen angetrieben werden. Je nach Drehrichtung des Motors fährt ein damit verbundener Zylinder ein oder aus. Um eine Regelung der Zylindergeschwindigkeit zu erreichen, kann das MRF-Ventil den Volumenstrom von 0% bis 100% über einen Bypass umleiten.

In allen Ausgestaltungen ist es im Sinne der vorliegenden Erfindung möglich, den weiteren Begriff "Türeinrichtung" auf den konkreteren Begriff "Tür" einzuschränken und die Begriffe entsprechend auszutauschen. Des Weiteren ist es in allen Ausgestaltungen möglich, die Erfindung auf eine verschwenkbare Tür oder verschwenkbare Klappe oder einer verschwenkbaren Deckel wie einen Heckdeckel zu konkretisieren. In diesem Sinne umfasst eine bewegbare Türeinrichtung eine verschwenkbare Tür und kann darauf eingeschränkt oder konkretisiert werden, sodass in der gesamten Beschreibung der Begriff "bewegbar" durch den Begriff "verschwenkbar" präzisiert werden kann. Umgekehrt kann der Begriff "Tür" durch "Türeinrichtung" ersetzt werden und es kann der Begriff "schwenkbar" durch "bewegbar" ersetzt werden.

Möglich ist es auch, eine Öffnungs- und/oder Schließbewegung eines Verdecks eines Cabriolets mit der Erfindung zu dämpfen. In solchen Ausgestaltungen ist das bewegbare Verdeck als Türeinrichtung anzusehen und die ganze Konstruktion mit der Tragkonstruktion und dem daran aufgenommenen Verdeck als Türkomponente.

Die Erfindung ist nicht auf den Einsatz bei Automobilen beschränkt, sie kann auch eingesetzt werden bei z. B. Trucks/LKW; Landwirtschaftsfahrzeugen, sonstigen (Kraft-)Fahrzeugen, autonomen Fahrzeugen, Taxis, Möbeln, Flugzeugen und Militärfahrzeugen.

Möglich ist es auch, eine Öffnungs- und/oder Schließbewegung eines Verdecks z. B. eines Cabriolets mit der Erfindung zu dämpfen. In solchen Ausgestaltungen ist das bewegbare Verdeck als Türeinrichtung anzusehen und die ganze Konstruktion mit der Tragkonstruktion und dem daran aufgenommenen Verdeck als Türkomponente. Die Anmelderin behält sich vor, einen Anspruch auf eine Fahrzeugvorrichtung oder sonstige Vorrichtung auszurichten, bei der eine bewegbare Einrichtung an einer Tragkonstruktion zwischen einer Öffnungsstellung und einer Schließstellung bewegbar aufgenommen ist und bei der die Bewegung durch eine magnetorheologische Dämpfereinrichtung dämpfbar ist.

Weitere Vorteile und Merkmale der vorliegenden Erfindung ergeben sich aus der Beschreibung der Ausführungsbeispiele, die im Folgenden mit Bezug auf die beiliegenden Figuren erläutert werden.

Darin zeigen:
- Figur 1: eine schematische Draufsicht auf ein Fahrzeug mit einer erfindungsgemäßen Türkomponente;
- Figur 2: eine schematische Explosionsdarstellung der Türkomponente nach Fig. 1;
- Figur 3: eine vergrößerten Querschnitt der Türkomponente nach Fig. 1;
- Figur 4: eine andere Ausgestaltung einer erfindungsgemäßen Türkomponente;
- Figur 5: eine weitere Ausgestaltung einer erfindungsgemäßen Türkomponente;
- Figur 6: noch eine Ausgestaltung einer erfindungsgemäßen Türkomponente; und
- Figur 7: eine schematischen Querschnitt durch ein Dämpfungsventil einer einer erfindungsgemäßen Türkomponente.

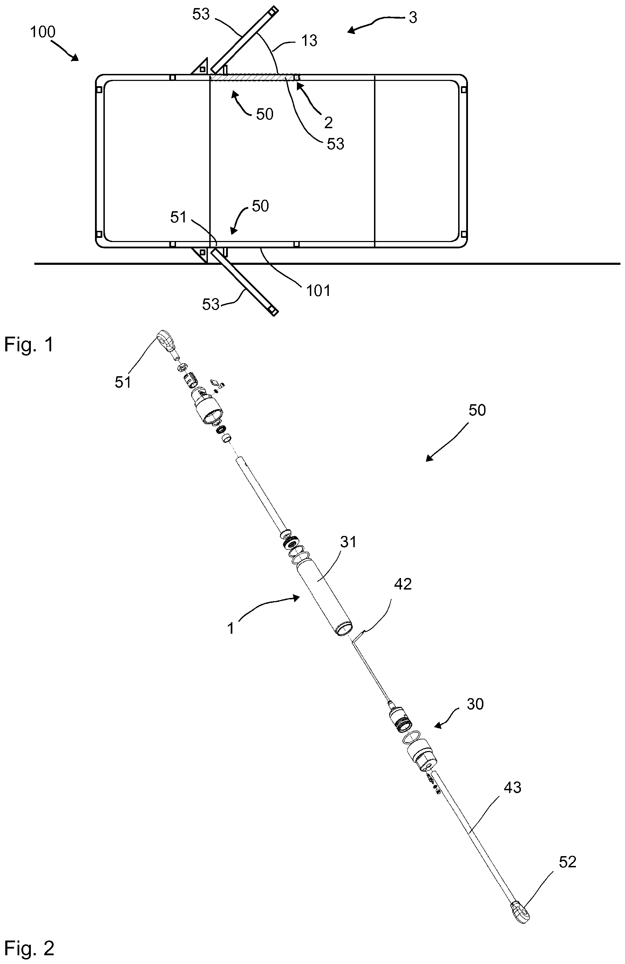

Figur 1 zeigt eine schematische Draufsicht auf ein an einem Straßenrand haltendes Kraftfahrzeug 100, bei dem hier zwei als Türen ausgeführte Türeinrichtungen 53 vorgesehen sind, die beide geöffnet sind. Die Türen 53 befinden sich jeweils etwa in einer Winkelstellung 13. Die Türen sind jeweils Teil einer Türkomponente 50, die hier die Türen 53 umfasst. Möglich ist es genauso, dass an die Türkomponente 50 eine Tür 53 angebracht wird. Die Türkomponente 50 umfasst jedenfalls Anschlusseinheiten 51 und 52 zum Anschluss an der Tragkonstruktion 101 des Fahrzeugs 100 bzw. an der Tür 53, um die Tür schwenkbar an der Tragkonstruktion 101 aufzunehmen. Dabei kann die Tür aus mehreren jeweils schwenkbaren Einheiten bestehen, die miteinander gelenkig verbunden sind. Die Tür kann an einer oder zwei oder mehr Schwenkachsen schwenkbar aufgenommen sein. Schraffiert eingezeichnet ist eine Tür 53 in der Schließstellung 2, in der die Tür hier bündig mit dem Fahrzeug abschließt.

In Figur 2 ist in einer vergrößerten Darstellung eine Explosionsdarstellung der Türkomponente 50 abgebildet, wobei die Türkomponente 50 eine Dämpfereinrichtung 1 umfasst, die einen Dämpfer auf magnetorheologischer Basis aufweist.

Die Türkomponente 50 in Figur 2 weist Anschlusseinheiten 51 und 52 zur Verbindung mit der Tragkonstruktion 101 und der Tür 53 auf, um eine definierte und gesteuerte Verschwenkung der Tür bei der Überführung von der in Figur 1 dargestellten Öffnungsstellung in die auch in Figur 1 angedeutete Schließstellung 2.

Die Dämpfereinrichtung 1 umfasst eine Zylindereinheit 31, in der der Kolben 38 der Kolbeneinheit 30 das Zylindervolumen 32 in eine erste Kammer 33 und eine zweite Kammer 34 variabel teilt.

Ein Ausgleichsvolumen 36 einer Ausgleichskammer dient zum Ausgleich der in die Zylindereinheit 31 eintauchenden Kolbenstange 43.

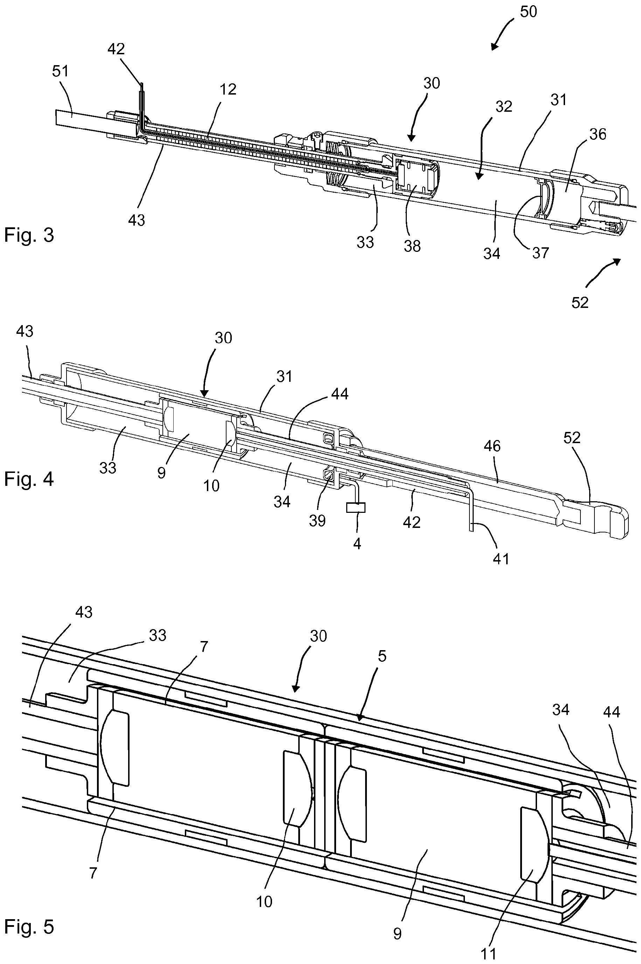

Figur 3 zeigt eine vergrößerte Querschnittsdarstellung eines Teils der Türkomponente 50 aus Figur 2.

An der hier im Schnitt dargestellten und montierten Dämpfereinrichtung 1 ist die Kolbeneinheit 30 mit dem Kolben 38 zu erkennen, in dem die Magneteinrichtung 9 mit der elektrischen Spule 10 angeordnet ist. Der Kolben 38 teilt das Zylindervolumen 32 der Zylindereinheit 31 in eine erste Kammer 33 und eine zweite Kammer 34. Das Dämpfungsventil ist außerhalb der Kolbeneinheit 31 angeordnet. Die Magneteinrichtung 9 mit der elektrischen Spule 10 ist an dem Dämpfungsventil angeordnet.

Weiterhin ist in der Zylindereinheit 31 die Ausgleichseinrichtung mit der Ausgleichskammer 37 und dem Ausgleichsvolumen 36 dargestellt. Die Ausgleichskammer 37 wird durch einen variabel innerhalb der Zylindereinheit 31 gleitenden Trennkolben von der zweiten Kammer 34 getrennt. Möglich ist es auch, die Ausgleichskammer auf die andere Seite zu setzen, wobei dann eine Abdichtung gegenüber der durchlaufenden Kolbenstange und der ersten Kammer 33 erfolgen muss. Die Ausgleichskammer 37 liegt auf der Niederdruckseite des Einwegkreislaufs. Ventile 47 und 48 zum Befüllen der ersten bzw. zweiten Kammer 33, 34 und der Ausgleichskammer 37 sind vorgesehen. Die Ausgleichskammer 37 ist mit einem gasförmigen Medium unter einem geringen Druck gefüllt, sodass das eintauchende Volumen der Kolbenstange 43 ausgeglichen werden kann.

An der Kolbenstange 43 ist eine Sensoreinrichtung 12 angebracht, mit der hier eine Absolutposition der Dämpfereinrichtung 1 detektiert werden kann. Durch Abfrage der Sensoreinrichtung kann die Position der beiden Anschlusseinheiten 51 und 52 zueinander festgestellt werden, sodass mit der Sensoreinrichtung auch direkt die Winkelstellung der Tür 53 erfasst wird.

Die Anschlusskabel für die elektrische Spule in dem Kolben 38 und die Sensoreinrichtung 12 werden hier durch die Kolbenstange 43 nach außen geführt.

Figur 4 zeigt eine Variante, bei der eine durchgehende Kolbenstange bzw. 2 Kolbenstangen 43, 44 vorgesehen sind. Das Innere der Zylindereinheit 31 wird durch den Kolben 38 wieder in 2 Kammern 33 und 34 geteilt. Hier werden beide Kolbenstangen 43 und 44 an den jeweiligen Enden nach draußen geführt, sodass ein Eintauchen des Volumens einer Kolbenstange nicht ausgeglichen zu werden braucht. Um eine Volumenausdehnung durch Temperaturunterschiede ausgleichen zu können, ist hier eine Ausgleichseinrichtung 39 vorgesehen, die beispielsweise als hohler Gummiring oder dergleichen ausgeführt ist und insofern bei einer Volumenausdehnung oder einer Volumenabnahme durch Temperaturunterschiede bedingt einen entsprechenden Volumenausgleich zur Verfügung stellt. Eine solche Ausgleichseinrichtung kann in der Kammer 33 oder der Kammer 34 angeordnet sein. Möglich sind Ausgleichseinrichtungen in den beiden Kammern 33 und 34.

In allen Ausgestaltungen ist der Kolben 38 auch als Dämpfungsventil 5 ausgeführt und weist einen oder 2 oder mehrere Strömungskanäle 7 auf, die die erste Kammer 33 mit der zweiten Kammer 34 verbinden. Die Kammern 33 und 34 sind mit einem magnetorheologischen Fluid 6 gefüllt. Die Dämpfung wird hier dadurch erreicht, dass an dem Dämpfungsventil 5 eine Magneteinrichtung 9 oder wenigstens eine Magneteinrichtung 9 angeordnet ist, die hartmagnetisches Material und hier auch eine elektrische Spule umfasst.

Über einen kurzen elektrischen Impuls an der Spule 10 wird ein magnetischer Impuls ausgelöst, der zu einer permanenten Magnetisierung der Magneteinrichtung 9 führt, sodass im Anschluss daran der Strömungswiderstand durch den Strömungskanal 7 entsprechend der Stärke des wirkenden Magnetfeldes 8 ansteigt.

Durch entsprechende Ummagnetisierungen der Magneteinrichtungen 9 kann so eine beliebige Dämpfung der Türbewegung der Tür 53 eingestellt werden. Außerdem ist es möglich, zusätzlich zu einem permanent wirkenden Magnetfeld die Spule 10 einzusetzen, um das Magnetfeld 8 der Magneteinrichtungen 9 dynamisch zu modellieren. Durch ein gleichgerichtetes Magnetfeld kann die Dämpfung verstärkt werden und durch ein entsprechend entgegengesetzt ausgerichtetes Magnetfeld kann die Dämpfung abgeschwächt oder sogar auf null reduziert werden.

In diesem Ausführungsbeispiel ist das Anschlusskabel 41 bzw. die Anschlusskabel 41 sind durch die Kolbenstange 44 nach außen geführt. Die Kolbenstange 44 ist in einem Rohr 46 verschiebbar aufgenommen. Am Ende der Kolbenstange 44 wird hier das Anschlusskabel 41 aus der Kolbenstange herausgeführt und durch einen Schlitz 42 in dem Rohr 46 nach außen geführt.

Beispielhaft für alle Ausführungsbeispiele ist in Figur 4 eine Steuereinrichtung 4 eingezeichnet, mit der das Dämpfungsventil 5, die Dämpfereinrichtung 1 und/oder die gesamte Türkomponente 50 steuerbar ist. Die Steuereinrichtung 4 kann auch Teil des Fahrzeugs 100 oder einer anderen Vorrichtung sein.

Figur 5 zeigt eine andere Variante, bei der 2 Magneteinrichtungen 9 bzw. wenigstens 2 elektrische Spulen 10 und 11 vorgesehen sind. Die magnetischen Spulen 10 und 11 der Magneteinrichtungen 9 sind wiederum im Kolben 38 der Kolbeneinheit 30 innerhalb der Zylindereinheit 31 angeordnet. Auch hier trennt der Kolben 2 Kammern 33 und 34 des Zylindervolumens 32. Es können auf beiden Seiten erste und zweite Kolbenstangen 43 und 44 vorgesehen sein oder es ist nur eine Kolbenstange auf einer Seite herausgeführt. In einem solchen Fall wird wieder eine Ausgleichskammer 37 mit einem Ausgleichsvolumen 36 erforderlich.

Hier wird eine elektrische Spule 10, 11 zur Erzeugung eines magnetischen Impulses und zur dauerhaften Magnetisierung der Magneteinrichtung 9 eingesetzt. Die jeweils andere elektrische Spule 11, 10 kann zur Modulation des aktuell wirkenden Magnetfeldes eingesetzt werden.

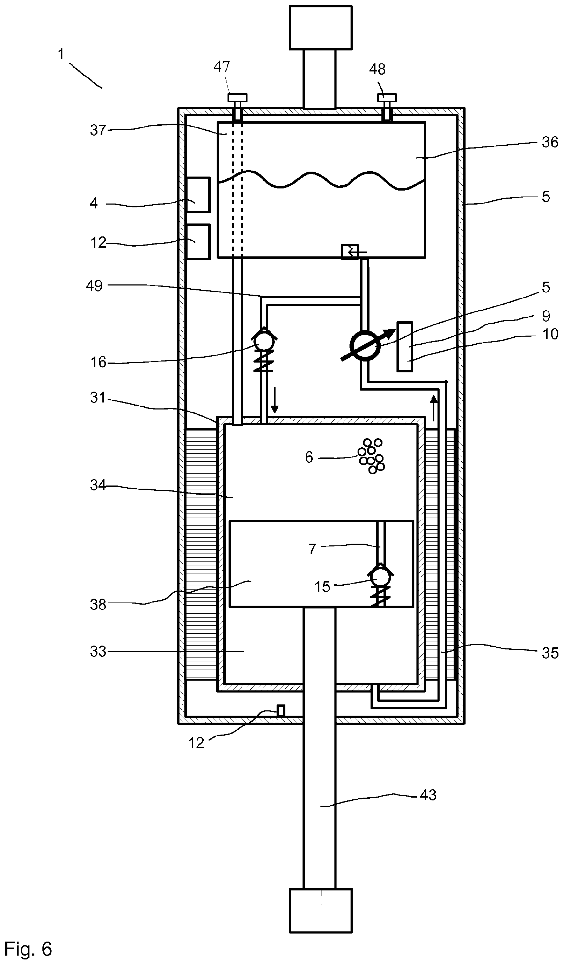

Figur 6 zeigt eine andere schematisch dargestellte Variante einer Dämpfereinrichtung 1 einer Türkomponente 50 mit Anschlusseinheiten 51 und 52. Die Dämpfereinrichtung 1 weist ein magnetorheologisches Fluid 6 als Arbeitsfluid auf. Eine Kolbeneinheit 30 mit einem Kolben 38 trennt eine erste Kammer 33 von der zweiten Kammer 34. Durch den Kolben führt wenigstens ein Strömungskanal 7. Das Einwegventil 15 öffnet für die Strömung des magnetorheologischen Fluids von der zweiten Kammer 34 in die erste Kammer 33. Von dort aus wird das Arbeitsfluid durch den Rückkanal 35 zu dem hier externen Dämpfungsventil 5 geleitet, dem eine Magneteinrichtung 9 und eine elektrische Spule 10 zugeordnet sind, um die gewünschte Dämpfung einzustellen. Das Dämpfungsventil 5 steht wiederum über eine Leitung 49 und ein zweites Einwegventil 16 mit der zweiten Kammer 34 in Strömungsverbindung.

Sowohl beim Eintauchen der Kolbenstange 43 in die Zylindereinheit 31 als auch beim Austauchen der Kolbenstange 43 aus der Zylindereinheit 31 strömt das Arbeitsfluid 6 in der gleichen Richtung entlang der eingezeichneten Pfeile. Je nachdem, ob die Kolbenstange eintaucht oder austaucht, wird magnetorheologisches Fluid der Ausgleichskammer 37 zugeleitet oder es wird magnetorheologisches Fluid aus der Ausgleichskammer 37 entnommen. In der Ausgleichskammer 37 ist ein Ausgleichsvolumen 36 vorgesehen, welches mit einem Gas gefüllt ist.

Eine oder mehrere Sensoreinrichtungen 12 können vorgesehen sein, um eine Relativposition der beiden Anschlusseinheiten 51 und 52 zueinander zu detektieren, um daraus eine Winkelstellung der Tür 53 abzuleiten. Möglich ist es in allen Ausgestaltungen aber auch, dass andere Winkelsensoren z. B. am Drehgelenk vorgesehen sind, sodass direkt eine Winkelstellung ausgegeben wird.

Auch hier wird eine elektrische Spule 10 zur Erzeugung eines magnetischen Impulses und zur dauerhaften Magnetisierung der Magneteinrichtung 9 eingesetzt. Die gleiche oder auch eine andere elektrische Spule kann zur Modulation des aktuell wirkenden Magnetfeldes eingesetzt werden.

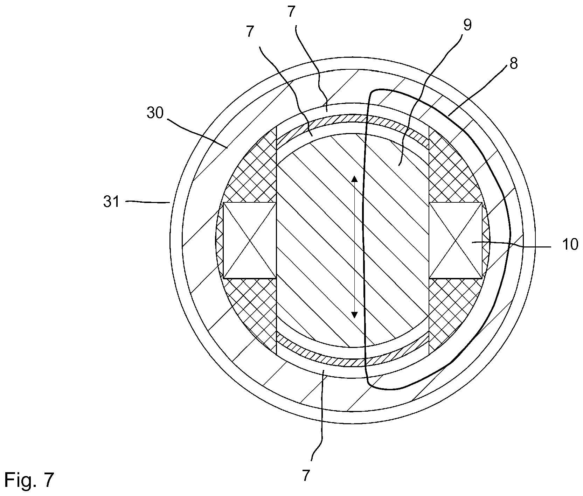

Figur 7 zeigt einen schematischen Querschnitt durch die Zylindereinheit 31 und dem darin angeordneten Kolben 38. Klar erkennbar sind die Strömungskanäle 7 des Dämpfungsventils 5, die hier durch eine Trennwand jeweils noch in zwei Teilkanäle unterteilt sind. Eingezeichnet ist auch eine Magnetfeldlinie des Magnetfeldes 8. Das Magnetfeld tritt etwa senkrecht durch die Strömungskanäle 7 des Dämpfungsventils durch. Die elektrische Spule 10 dient zur Erzeugung eines variablen Magnetfelds und insbesondere auch dazu, einen magnetischen Impuls auszugeben, um die Magneteinrichtung 9 wunschgemäß zu magnetisieren.

In entsprechender Weise kann - wie es in Figur 7 im Schnitt dargestellt ist - auch ein externes Dämpfungsventil für z. B. die Türkomponente nach Figur 6 ausgebildet sein. Alle abgebildeten Teile sind dann vorzugsweise unbeweglich zueinander. Die Strömungskanäle 7 des Dämpfungsventils 5 können jeweils durch eine Trennwand in zwei Teilkanäle unterteilt sein. Das Magnetfeld tritt auch hier wieder etwa senkrecht durch die Strömungskanäle 7 des Dämpfungsventils 5 durch. Die elektrische Spule 10 dient zur Erzeugung eines variablen Magnetfelds und kann insbesondere auch dazu verwendet werden, einen magnetischen Impuls auszugeben, um die Magneteinrichtung 9 wunschgemäß dauerhaft zu magnetisieren.

**Bezugszeichenliste:**

| | | | |
|---|---|---|---|
| 1 | Dämpfer | 30 | Kolbeneinheit |
| 1 | Dämpfereinrichtung | 31 | Zylindereinheit |
| 2 | Schließstellung | 32 | Zylindervolumen |
| 3 | Öffnungsstellung | 33 | erste Kammer |
| 4 | Steuereinrichtung | 34 | zweite Kammer |
| 5 | Dämpfungsventil | 35 | Rückkanal |
| 6 | MRF | 36 | Ausgleichsvolumen |
| 7 | Strömungskanal | 37 | Ausgleichskammer |
| 8 | Magnetfeld | 38 | Kolben |
| 9 | Magneteinrichtung | 39 | Ausgleichseinrichtung |
| 10 | elektrische Spule | 40 | elektrische Anschlusseinheit |
| 11 | elektrischen Spule | | |
| 12 | Sensoreinrichtung | 41 | Anschlusskabel |
| 13 | Winkelstellung | 42 | Schlitz |
| 14 | vorbestimmte Winkelposition | 43 | erste Kolbenstange |
| | | 44 | zweite Kolbenstange |
| 15 | erstes Einwegventil | 45 | Durchmesser von 43 |
| 16 | zweites Einwegventil | 46 | Rohr |
| 18 | magnetischer Impuls | 47 | Ventil |
| 19 | Zeitspanne | 48 | Ventil |
| 20 | Änderungsgeschwindigkeit | 49 | Leitung |
| 21 | Verzögerung | 50 | Türkomponente |
| 22 | Drehgeschwindigkeit | 51 | Anschlusseinheit |
| 23 | Grenzwert von 20 | 52 | Anschlusseinheit |
| 24 | geringere Dämpfung | 53 | Tür |
| 25 | größere Dämpfung | 54 | Winkelstellung |
| 26 | maximale Dämpfung | 60 | Hindernis |
| 27 | Dämpfung | 100 | Fahrzeug |
| 28 | Schließgeschwindigkeit | 101 | Tragkonstruktion |
| 29 | zweiter Ausgleichskanal | | |

## Patentansprüche

1. Türkomponente (50) mit wenigstens einer steuerbaren und ein magnetorheologisches Fluid (6) als Arbeitsfluid enthaltenden Dämpfereinrichtung (1) umfassend zwei relativ zueinander bewegbare Anschlusseinheiten (51, 52), wobei eine der beiden Anschlusseinheiten (51, 52) mit einer Tragkonstruktion (101) und die andere der beiden Anschlusseinheiten (51, 52) mit einer bewegbaren Türeinrichtung (53), insbesondere eines Fahrzeugs (100), verbindbar ist, um eine Bewegung der Tür (53) wenigstens teilweise zwischen einer Schließstellung (2) und einer Öffnungsstellung (3) mit einer Steuereinrichtung (4) gesteuert zu dämpfen,
wobei die Dämpfereinrichtung (1) wenigstens ein elektrisch einstellbares und seinen eingestellten Zustand stromlos haltendes magnetorheologisches Dämpfungsventil (5) umfasst, um über eine elektrische Einstellung des Dämpfungsventils (5) eine Dämpfungseigenschaft der Dämpfereinrichtung (1) bedarfsweise dauerhaft einzustellen,
wobei die Steuereinrichtung (4) dazu eingerichtet und ausgebildet ist, das Dämpfungsventil (5) in der Schließstellung (2) der Tür auf eine stromlos wirkende geringe Dämpfung einzustellen,
**dadurch gekennzeichnet,**
**dass** die Steuereinrichtung (4) dazu eingerichtet und ausgebildet ist, das Dämpfungsventil (5) in einer Öffnungsstellung (3) der Türeinrichtung (53) nach Ablauf einer vorgegebenen Zeitspanne auf eine stromlos wirkende starke Dämpfung einzustellen.

2. Türkomponente (50) nach dem vorhergehenden Anspruch, wobei das Dämpfungsventil (5) einen von einer magnetorheologischen Flüssigkeit (6) durchströmbaren Strömungskanal (7) umfasst, wobei der Strömungskanal (7) einem veränderbaren Magnetfeld (8) aussetzbar ist, so dass der Strömungswiderstand des Strömungskanals (7) und somit eine Dämpfung der Dämpfereinrichtung (1) über das Magnetfeld (8) in dem Strömungskanal (7) beeinflussbar ist, wobei vorzugsweise das Magnetfeld (8) durch eine zumindest teilweise aus hartmagnetischem Material bestehende Magneteinrichtung (9) dauerhaft erzeugbar ist und wobei die Magnetisierung der Magneteinrichtung (9) durch wenigstens einen magnetischen Impuls wenigstens einer elektrischen Spule (11, 12) dauerhaft veränderbar ist.

3. Türkomponente (50) nach einem der vorhergehenden Ansprüche, wobei eine Sensoreinrichtung (12) zugeordnet ist, um ein Maß für eine Winkelstellung (13) der bewegbaren Türeinrichtung (53) zu erfassen, wobei die Sensoreinrichtung (12) insbesondere ein Reibrad umfasst, mit welchem ein Maß für eine Relativbewegung der beiden Anschlusseinheiten (51, 52) zueinander erfassbar ist.

4. Türkomponente (50) nach einem der vorhergehenden Ansprüche, wobei die Steuereinrichtung (4) dazu eingerichtet und ausgebildet ist, das Dämpfungsventil (5) beim Bewegen der Türeinrichtung (53) auf eine stromlos wirkende geringe Dämpfung einzustellen.

5. Türkomponente (50) nach einem der vorhergehenden Ansprüche, wobei das in dem Strömungskanal (7) wirkende Magnetfeld (8) mit einer elektrischen Spule (11, 12) modulierbar ist.

6. Türkomponente (50) nach einem der vorhergehenden Ansprüche, wobei wenigstens zwei elektrischen Spulen (11, 12) vorgesehen sind, von denen wenigstens eine zur Ausgabe magnetischer Impulse zur dauerhaften Magnetisierung der Magneteinrichtung (9) ausgebildet ist und von denen wenigstens eine zur Modulierung des in dem Strömungskanal (7) wirkenden Magnetfelds (8) ausgebildet ist.

7. Türkomponente (50) nach einem der vorhergehenden Ansprüche, wobei die Dämpfereinrichtung (1) ein mechanisch einstellbares Hydraulikventil als Dämpfungsventil (5) umfasst.

8. Verfahren zum Dämpfen einer Bewegung einer Türeinrichtung (53) insbesondere eines Fahrzeugs (100) mit einer Dämpfereinrichtung (1) mit einer einstellbaren und steuerbaren Dämpfung, wobei eine Bewegung der Türeinrichtung (53) wenigstens teilweise zwischen einer Schließstellung (2) und einer Öffnungsstellung (3) gesteuert gedämpft wird, **dadurch gekennzeichnet,**
**dass** ein Dämpfungsventil (5) der Dämpfereinrichtung (1) bedarfsweise elektrisch eingestellt wird und die eingestellten Dämpfungseigenschaften stromlos dauerhaft hält, wobei die Steuereinrichtung (4) das Dämpfungsventil (5) in der Schließstellung (2) der Tür auf eine stromlos wirkende geringe Dämpfung einstellt,
**dadurch gekennzeichnet,**
**dass** die Steuereinrichtung (4) das Dämpfungsventil (5) in einer Öffnungsstellung (3) der Türeinrichtung (53) nach Ablauf einer vorgegebenen Zeitspanne auf eine stromlos wirkende starke Dämpfung einstellt.

9. Verfahren nach dem vorhergehenden Anspruch, wobei ein Maß für eine Winkelstellung (13) der Türeinrichtung (53) erfasst wird und die Dämpfereinrichtung (1) in der Schließstelllung (2) der Türeinrichtung (53) auf eine stromlos geringe Dämpfung eingestellt wird
und wobei in der Öffnungsstellung (3) die Dämpfereinrichtung (1) auf eine stromlos wirkende hohe Dämpfung eingestellt wird, wenn sich die Türeinrichtung (53) für eine vorgegebene Zeitspanne nicht wesentlich bewegt.

10. Türkomponente (50) nach einem der vorhergehenden Ansprüche 1 bis 7, wobei die Dämpfereinrichtung (1) eine Kolbeneinheit (30) und eine die Kolbeneinheit (30) umgebende Zylindereinheit (31) umfasst, wobei die Kolbeneinheit (30) ein Zylindervolumen (32) in zwei Kammern (33, 34) teilt,
und wobei die Kolbeneinheit (30) mit einem ersten Einwegventil (15) ausgerüstet ist, und dass die beiden Kammern (33, 34) über einen externen und mit wenigstens einem steuerbaren magnetorheologischen Dämpfungsventil (5) ausgerüsteten Rückkanal (35) miteinander zu einem Einwegkreislauf verbunden sind, sodass das magnetorheologische Fluid (6) beim Einfahren und Ausfahren der Kolbeneinheit (30) in die gleiche Strömungsrichtung durch die Kolbeneinheit (30) strömt, wobei insbesondere auf einer Niederdruckseite des Dämpfungsventils (5) ein Ausgleichsvolumen (36) vorgesehen ist und/oder wobei die Kolbeneinheit (30) eine durchgehende Kolbenstange (43, 44) umfasst, die an beiden Enden aus der Zylindereinheit (31) nach außen geführt wird.

11. Türkomponente (50) nach dem vorhergehenden Anspruch, wobei eine erste Kammer (33) der beiden Kammern (33, 34) mit dem Dämpfungsventil (5) und wobei das Dämpfungsventil (5) über ein zweites Einwegventil (16) mit der zweiten Kammer (34) verbunden ist.

12. Türkomponente (50) nach einem der beiden vorhergehenden Ansprüche, wobei die Kolbeneinheit (31) eine sich durch die erste Kammer (33) erstreckende erste Kolbenstange (43) und eine sich durch die zweite Kammer (34) erstreckende zweite Kolbenstange (44) aufweist und wobei insbesondere beide Kolbenstangen (43, 44) jeweils aus dem Zylindervolumen (32) und/oder der Zylindereinheit (31) nach außen geführt werden und/oder wobei eine der Kolbenstangen (43, 44) teleskopierbar ausgebildet ist und an einer Seite an dem Kolben (38) befestigt und an der anderen Seite mit der Zylindereinheit (31) fest verbunden ist und/oder wobei die erste und die zweite Kolbenstange (43, 44) jeweils den gleichen Durchmesser (45) aufweisen.

13. Türkomponente (50) nach einem der drei vorhergehenden Ansprüche, wobei die Dämpfereinrichtung (1) wenigstens eine Ausgleichseinrichtung (39) umfasst, wobei die Ausgleichseinrichtung (39) insbesondere ein komprimierbares Ausgleichsvolumen (36) umfasst.

14. Türkomponente (50) nach Anspruch 10 oder 12, wobei eine der beiden Kolbenstangen (43, 44) als elektrische Anschlusseinheit (40) dient und an der Kolbenstange (43, 44) wenigstens ein Anschlusskabel (41) geführt wird und/oder wobei wenigstens eine der beiden Kolbenstangen (43, 44) außerhalb der Zylindereinheit (31) in einer mit wenigstens einem Schlitz (42) ausgerüsteten Rohr (46) verschiebbar aufgenommen ist und wobei das Rohr insbesondere Teil einer der Anschlusseinheiten ist.

15. Türkomponente nach einem der vorhergehenden Ansprüche 10 oder 12 oder 14, wobei die Dämpfereinrichtung wenigstens eine Messeinrichtung umfasst und wobei ein Teil der Messeinrichtung an der Kolbenstange befestigt ist.

## Claims

1. Door component (50) with at least one controllable damper device (1) containing a magnetorheological fluid (6) as the working fluid, comprising two connecting units (51, 52) movable relative to one another, one of the two connecting units (51, 52) being provided for connecting with a supporting structure (101) and the other of the two connecting units (51, 52), with a rotatable door device (53) in particular of a vehicle (100), to at least partially control the damping of a movement of the door (53) between a closed position (2) and an open position (3) by means of a control device (4), the damper device (1) comprising at least one magnetorheological damping valve (5) which is electrically adjustable and maintains its set state currentless, to permanently set a damping characteristic of the damper device (1) as needed by way of electrically setting the damping valve (5), wherein the control device (4) is set up and configured to set the damping valve (5) in the closed position (2) of the door to a currentless effective weak damping, **characterized in that** the control device (4) is set up and configured to set the damping valve (5) in an open position (3) of the door device (53) to a currentless effective strong damping upon expiry of a predetermined time interval.

2. The door component (50) according to the preceding claim wherein the damping valve (5) comprises a flow duct (7) through which a magnetorheological liquid (6) can flow, wherein the flow duct (7) can be exposed to a variable magnetic field (8) so that the flow resistance of the flow duct (7) and thus the damping of the damper device (1) can be influenced by way of the magnetic field (8) in the flow duct (7) wherein preferably the magnetic field (8) can be generated permanently by means of a magnetic device (9) consisting at least partially of a magnetically hard material and wherein the magnetization of the magnetic device (9) can be permanently changed by at least one magnetic pulse (11) of at least one magnetic coil (11, 12).

3. The door component (50) according to any of the preceding claims wherein a sensor device (12) is assigned for obtaining a measure for an angular position (13) of the movable door device (53), the sensor device (12) in particular comprising a friction gear which allows to obtain a measure of a motion of the two connecting units (51, 52) relative to one another.

4. The door component (50) according to any of the preceding claims wherein the control device (4) is set up and configured to set the damping valve (5) to a currentless effective weak damping as the door device (53) moves.

5. The door component (50) according to any of the preceding claims wherein the magnetic field (8) acting in the flow duct (7) can be modulated by means of an electric coil (11, 12).

6. The door component (50) according to any of the preceding claims wherein at least two electric coils (11, 12) are provided at least one of which is configured for emitting magnetic pulses to permanently magnetise the magnetic device (9) and at least one of which is configured for modulating the magnetic field (8) acting in the flow duct (7).

7. The door component (50) according to any of the preceding claims wherein the damper device (1) comprises a mechanically adjustable hydraulic valve as a damping valve (5).

8. Method for damping the movement of a door device (53) in particular of a vehicle (100) with a damper device (1) with adjustable and controllable damping, wherein movement of the door device (53) is provided for at least partially controlled damping between a closed position (2) and an open position (3), **characterized in that** a damping valve (5) of the damper device (1) is electrically adjusted as needed and permanently maintains the set damping characteristics currentless, the control device (4) setting the damping valve (5) in the closed position (2) of the door to a currentless effective weak damping, **characterized in that** the control device (4) sets the damping valve (5) to a currentless effective strong damping in an open position (3) of the door device (53) upon expiry of a predetermined time interval.

9. The method according to the preceding claim wherein a measure for an angular position (13) of the door device (53) is obtained and the damper device (1) is set to a currentless effective weak damping in the closed position (2) of the door device (53) and wherein the damper device (1) is set to a currentless effective strong damping in the open position (3) when the door device (53) does not significantly move during a predetermined time interval.

10. The door component (50) according to any of the preceding claims 1 to 7 wherein the damper device (1) comprises a piston unit (30) and a cylinder unit (31) surrounding the piston unit (30), the piston unit (30) subdividing the cylinder volume (32) in two chambers (33, 34), and wherein the piston unit (30) is equipped with a first one-way valve (15), and that the two chambers (33, 34) are interconnected to form a one-way circuit through an external feedback channel (35) equipped with at least one controllable magnetorheological damping valve (5) so that the magnetorheological fluid (6) flows through the piston unit (30) in the same flow directions both when the piston unit (30) retracts and when it extends, wherein in particular on a low pressure side of the damping valve (5) an equalizing volume (36) is provided and/or wherein the piston unit (30) comprises a continuous piston rod (43, 44) that is routed out of the cylinder unit (31) at both ends.

11. The door component (50) according to the preceding claim wherein a first chamber (33) of the two chambers (33, 34) is connected with the damping valve (5) and wherein the damping valve (5) is connected with the second chamber (34) via a second one-way valve (16).

12. The door component (50) according to any of the two preceding claims wherein the piston unit (31) includes a first piston rod (43) extending through the first chamber (33) and a second piston rod (44) extending through the second chamber (34) and wherein in particular both of the piston rods (43, 44) are each routed outwardly out of the cylinder volume (32) and/or the cylinder unit (31) and/or wherein one of the piston rods (43, 44) is configured telescopic and is attached to the piston (38) on one side and fixedly connected with the cylinder unit (31) on the other side and/or wherein the first and second piston rods (43, 44) each show the same diameter (45).

13. The door component (50) according to any of the three preceding claims wherein the damper device (1) comprises at least one equalizing device (39), the equalizing device (39) comprising in particular a compressible equalizing volume (36).

14. The door component (50) according to claim 10 or 12 wherein one of the two piston rods (43, 44) serves as an electric connecting unit (40) and at least one connecting cable (41) is guided on the piston rod (43, 44) and/or wherein at least one of the two piston rods (43, 44) is displaceably accommodated external of the cylinder unit (31) in a tube (46) equipped with at least one slot (42) and wherein the tube is in particular part of one of the connecting units.

15. The door component (50) according to any of the preceding claims 10 or 12 or 14 wherein the damper device comprises at least one measuring device and wherein part of the measuring device is fastened to the piston rod.

## Revendications

1. Composant de porte (50) comprenant au moins un dispositif amortisseur (1) commandable et contenant un fluide magnétorhéologique (6) en tant que fluide de travail, comprenant deux unités de raccordement (51, 52) aptes à être déplacées l'une par rapport à l'autre, dans lequel l'une des deux unités de raccordement (51, 52) peut être reliée à une construction de support (101) et l'autre des deux unités de raccordement (51, 52) peut être reliée à un dispositif de porte (53) déplaçable, en particulier d'un véhicule (100) afin d'amortir de manière commandée, au moins en partie, au moyen d'un dispositif de commande (4), un mouvement de la porte (53) entre une position fermée (2) et une position ouverte (3), dans lequel le dispositif amortisseur (1) comprend au moins une valve d'amortissement magnétorhéologique (5) réglable électriquement et maintenant sans courant son état réglé afin de régler, si besoin est de manière permanente, par un réglage électrique de la valve d'amortissement (5), une propriété d'amortissement du dispositif amortisseur (1), dans lequel le dispositif de commande (4) est agencé et conçu pour régler la valve d'amortissement (5), dans la position fermée (2) de la porte, à un faible amortissement agissant sans courant, **caractérisé par le fait que** le dispositif de commande (4) est adapté et conçu pour régler la valve d'amortissement (5), dans une position ouverte (3) du dispositif de porte (53), après qu'une période de temps prédéterminée s'est écoulée, à un fort amortissement agissant sans courant.

2. Composant de porte (50) selon la revendication précédente, dans lequel la valve d'amortissement (5) comprend un canal d'écoulement (7) apte à être traversé par un liquide magnétorhéologique (6), dans lequel ledit canal d'écoulement (7) peut être exposé à un champ magnétique (8) variable de sorte que la résistance à l'écoulement du canal d'écoulement (7) et donc un amortissement du dispositif amortisseur (1) peuvent être influencés par le champ magnétique (8) dans le canal d'écoulement (7), dans lequel, de préférence, le champ magnétique (8) peut être généré de manière permanente au moyen d'un dispositif magnétique (9) réalisé au moins en partie à partir de matériau magnétique dur, et dans lequel l'aimantation du dispositif magnétique (9) peut être modifiée de manière permanente par au moins une impulsion magnétique d'au moins une bobine électrique (11, 12).

3. Composant de porte (50) selon l'une quelconque des revendications précédentes, dans lequel un dispositif capteur (12) est associé afin de détecter une mesure pour une position angulaire (13) du dispositif de porte (53) déplaçable, dans lequel le dispositif capteur (12) comprend en particulier une roue à friction au moyen duquel peut être saisie une mesure pour un mouvement relatif des deux unités de raccordement (51, 52) l'une par rapport à l'autre.

4. Composant de porte (50) selon l'une quelconque des revendications précédentes, dans lequel le dispositif de commande (4) est agencé et conçu pour régler la valve d'amortissement (5), lors du mouvement du dispositif de porte (53), à un faible amortissement agissant sans courant.

5. Composant de porte (50) selon l'une quelconque des revendications précédentes, dans lequel le champ magnétique (8) agissant dans le canal d'écoulement (7) peut être modulé au moyen d'une bobine électrique (11, 12).

6. Composant de porte (50) selon l'une quelconque des revendications précédentes, dans lequel au moins deux bobines électriques (11, 12) sont prévues dont l'une au moins est conçue pour délivrer des impulsions magnétiques pour une aimantation permanente du dispositif magnétique (9) et dont l'une au moins est conçue pour moduler le champ magnétique (8) agissant dans le canal d'écoulement (7).

7. Composant de porte (50) selon l'une quelconque des revendications précédentes, dans lequel le dispositif amortisseur (1) comprend en tant que valve d'amortissement (5) une soupape hydraulique réglable de façon mécanique.

8. Procédé pour amortir un mouvement d'un dispositif de porte (53), en particulier d'un véhicule (100), au moyen d'un dispositif amortisseur (1) avec un amortissement réglable et commandable, dans lequel un mouvement du dispositif de porte (53) est amorti de manière commandée au moins en partie entre une position fermée (2) et une position ouverte (3),
**caractérisé par le fait**
**qu'**une valve d'amortissement (5) du dispositif amortisseur (1) est réglée électriquement, si besoin est, et maintient sans courant en permanence les propriétés d'amortissement réglées, dans lequel le dispositif de commande (4) règle la valve d'amortissement (5), dans la position fermée (2) de la porte, à un faible amortissement agissant sans courant,
**caractérisé par le fait que** le dispositif de commande (4) règle la valve d'amortissement (5), dans une position ouverte (3) du dispositif de porte (53), après qu'une période de temps prédéterminée s'est écoulée, à un fort amortissement agissant sans courant.

9. Procédé selon la revendication précédente, dans lequel une mesure pour une position angulaire (13) du dispositif de porte (53) est détectée et le dispositif amortisseur (1) est réglé, dans la position fermée (2) du dispositif de porte (53), à un faible amortissement sans courant,
et dans lequel, en position ouverte (3), le dispositif amortisseur (1) est réglé à un fort amortissement agissant sans courant, lorsque le dispositif de porte (53) ne se déplace pas de manière significative pendant une période de temps prédéterminée.

10. Composant de porte (50) selon l'une quelconque des revendications précédentes 1 à 7, dans lequel le dispositif amortisseur (1) comprend une unité de piston (30) et une unité de cylindre (31) entourant l'unité de piston (30), dans lequel l'unité de piston (30) divisant un volume de cylindre (32) en deux chambres (33, 34), et dans lequel l'unité de piston (30) est équipée d'une première valve à voie unique (15), et que les deux chambres (33, 34) sont reliées l'une à l'autre, par un canal de retour (35) externe et équipé d'au moins une valve d'amortissement (5) magnétorhéologique commandable, pour former un circuit à voie unique de telle sorte que le fluide magnétorhéologique (6) circule à travers l'unité de piston (30) dans le même sens d'écoulement lorsque l'unité de piston (30) est rétractée et déployée, dans lequel un volume de compensation (36) est prévu en particulier sur un côté basse pression de la valve d'amortissement (5), et/ou dans lequel l'unité de piston (30) comprend une tige de piston (43, 44) continue qui est menée hors de l'unité de cylindre (31) aux deux extrémités.

11. Composant de porte (50) selon la revendication précédente, dans lequel une première chambre (33) des deux chambres (33, 34) est reliée à la valve d'amortissement (5) et dans lequel la valve d'amortissement (5) est reliée via une deuxième valve à voie unique (16) à la deuxième chambre (34).

12. Composant de porte (50) selon l'une quelconque des deux revendications précédentes, dans lequel l'ensemble de piston (31) présente une première tige de piston (43) s'étendant à travers la première chambre (33) et une deuxième tige de piston (44) s'étendant à travers la deuxième chambre (34), et dans lequel en particulier les deux tiges de piston (43, 44) sont menées chacune hors du volume de cylindre (32) et/ou de l'unité de cylindre (31) et/ou dans lequel l'une des tiges de piston (43, 44) est réalisée de manière télescopique et fixée au piston (38) sur un côté et est solidaire de l'unité de cylindre (31) sur l'autre côté, et/ou dans lequel les première et deuxième tiges de piston (43, 44) présentent chacune le même diamètre (45).

13. Composant de porte (50) selon l'une quelconque des revendications précédentes, dans lequel le dispositif amortisseur (1) comprend au moins un dispositif de compensation (39), dans lequel le dispositif de compensation (39) comprend en particulier un volume de compensation (36) compressible.

14. Composant de porte (50) selon la revendication 10 ou 12, dans lequel l'une des deux tiges de piston (43, 44) fait fonction d'unité de connexion électrique (40), et au moins un câble de connexion (41) est guidé sur la tige de piston (43, 44), et/ou dans lequel l'une au moins des deux tiges de piston (43, 44) est reçue, à l'extérieur de l'unité de cylindre (31), à coulissement dans un tuyau (46) équipé d'au moins une fente (42), et dans lequel, en particulier, ledit tuyau fait partie de l'une des unités de connexion.

15. Composant de porte selon l'une quelconque des revendications précédentes 10 ou 12 ou 14, dans lequel le dispositif amortisseur comprend au moins un dispositif de mesure et dans lequel une partie du dispositif de mesure est fixée sur la tige de piston.
